(19) **Europäisches Patentamt**
**European Patent Office**
**Office européen des brevets**

(11) **EP 2 274 852 B1**

(12) **FASCICULE DE BREVET EUROPEEN**

(45) Date de publication et mention
de la délivrance du brevet:
**28.11.2012 Bulletin 2012/48**

(51) Int Cl.:
**H04L 1/00** (2006.01)

(21) Numéro de dépôt: **09742068.1**

(22) Date de dépôt: **05.05.2009**

(86) Numéro de dépôt international:
**PCT/EP2009/055433**

(87) Numéro de publication internationale:
**WO 2009/135850 (12.11.2009 Gazette 2009/46)**

(54) **PROCÉDÉ DE DÉCODAGE D'UN SIGNAL METTANT EN OEUVRE UNE CONSTRUCTION PROGRESSIVE D'UN ARBRE DE DÉCODAGE, PRODUIT PROGRAMME D'ORDINATEUR ET DISPOSITIF DE DÉCODAGE CORRESPONDANTS**

VERFAHREN ZUR DEKODIERUNG EINES SIGNALS MIT PROGRESSIVEM AUFBAU EINES DEKODIERBAUMS, ENTSPRECHENDES COMPUTERPROGRAMMPRODUKT UND DEKODIERGERÄT

METHOD OF DECODING A SIGNAL IMPLEMENTING A PROGRESSIVE CONSTRUCTION OF A DECODING TREE, CORRESPONDING COMPUTER PROGRAM PRODUCT AND DECODING DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **05.05.2008 FR 0852985**

(43) Date de publication de la demande:
**19.01.2011 Bulletin 2011/03**

(73) Titulaire: **Institut Telecom - Telecom Paristech**
**75013 Paris (FR)**

(72) Inventeurs:
• **REKAYA-BEN OTHMAN, Ghaya**
  **F-92160 Antony (FR)**
• **SALAH, Abdellatif**
  **F-35700 Rennes (FR)**
• **GUILLOUARD, Samuel**
  **F-35135 Chantepie (FR)**

(74) Mandataire: **Guy, Marion**
  **Cabinet Vidon**
  **Technopôle Atalante**
  **16B rue de Jouanet**
  **35703 Rennes Cedex 7 (FR)**

(56) Documents cités:
**EP-A- 1 460 813**

• **MURUGAN A. D. ET AL: "A unified framework for tree search decoding: rediscovering the sequential decoder" IEEE TRANSACTIONS ON INFORMATION THEORY, vol. 47, no. 3, 1 mars 2006 (2006-03-01), pages 933-953, XP011183215 ISSN: 0018-9448 cité dans la demande**
• **CAIRE G ET AL: "On maximum-likelihood detection and the search for the closest lattice point" IEEE TRANSACTIONS ON INFORMATION THEORY, vol. 49, no. 10, 1 octobre 2003 (2003-10-01), pages 2389-2402, XP011102229 ISSN: 0018-9448**
• **GIANNAKIS G B ET AL: "Sphere Decoding Algorithms With Improved Radius Search" IEEE TRANSACTIONS ON COMMUNICATIONS, vol. 53, no. 7, 1 juillet 2005 (2005-07-01), pages 1104-1109, XP011136453 ISSN: 0090-6778**

**Description**

**1. Domaine de l'invention**

Le domaine de l'invention est celui des communications numériques.
Plus précisément, l'invention concerne la réception et le décodage de signaux numériques, reçus par exemple dans le cadre d'une transmission multi-antennes ou multi-utilisateurs.

**2. Art antérieur**

Un problème important dans le domaine des communications numériques est celui du décodage des signaux reçus.
En effet, après émission, les signaux sont véhiculés dans un canal de transmission qui peut être plus ou moins bruité. Les signaux reçus sont donc plus ou moins perturbés, et il peut être nécessaire de mettre en oeuvre un traitement spécifique pour les décoder correctement.
Afin d'obtenir de bonnes performances de décodage, il est souhaitable d'utiliser une technique de décodage optimale au sens du maximum de vraisemblance (ou ML, en anglais « Maximum Likelihood »). Un décodeur optimal permet d'estimer le signal candidat le plus probable, étant donné le signal observé reçu.
Pour effectuer un décodage optimal au sens ML, on dénombre classiquement tous les signaux transmis potentiels (encore appelés signaux candidats), et on sélectionne le signal le plus vraisemblable. Par exemple, le critère de sélection consiste à calculer une distance euclidienne entre le signal observé reçu et les signaux candidats.
Malheureusement, un tel dénombrement exhaustif est coûteux en temps et en ressources, et peut difficilement être mis en oeuvre dans des applications en temps réel. En effet, le nombre de candidats, et par conséquent la complexité du décodeur, augmentent de façon exponentielle en fonction de la longueur du signal numérique. Par exemple, un signal numérique présentant une longueur de 10 bits peut prendre $2^{10} = 1024$ valeurs différentes, et toutes ces valeurs doivent être dénombrées dans le décodage ML classique.
Afin de pallier cet inconvénient de dénombrement exhaustif, d'autres techniques de décodage sont apparues, comme les techniques de décodage séquentiel. Ces techniques utilisent une représentation arborescente du problème, dans laquelle chaque chemin du noeud racine à un noeud feuille est un signal transmis potentiel.
En effet, on rappelle qu'une structure de données peut être représentée sous la forme d'une structure arborescente présentant un ensemble de noeuds. Pour une constellation $2^n$ QAM (en anglais « Quadrature Amplitude Modulation »), $n$ branches partent d'un noeud de l'arbre. Le premier noeud de l'arbre est appelé noeud racine. Chaque noeud d'un arbre peut avoir zéro, un ou plusieurs noeuds fils, qui sont situés sous lui dans l'arbre. Un noeud qui ne présente aucun noeud fils est appelé noeud feuille. Il correspond au niveau le plus bas dans l'arbre. Un noeud a au plus un noeud parent, situé au-dessus de lui dans l'arbre. Le noeud racine étant le noeud le plus élevé dans l'arbre, il n'a pas de noeud parent. La profondeur (ou dimension) d'un noeud est la longueur du chemin de ce noeud à sa racine. Le noeud racine est le noeud sur lequel des opérations sur l'arbre commencent ordinairement. Tous les autres noeuds peuvent être atteints à partir de celui-ci en suivant des liens.
A partir de cette représentation arborescente, le décodage séquentiel dénombre un nombre réduit de signaux candidats par rapport à ce que ferait un décodeur optimal au sens ML. Par exemple, avec un nombre de symboles Q égal à 8 et en utilisant une constellation 16 QAM, un décodeur ML classique dénombre $16^8$ signaux candidats pour décoder un mot de code espace/temps, alors qu'un décodeur à pile ne dénombre que très peu de ceux-ci. Pour ce faire, les techniques de décodage séquentiel tiennent compte d'une contrainte de coûts (ou métrique), de façon à déterminer un unique chemin candidat à l'intérieur d'un arbre de décodage. Classiquement, le coût associé à un noeud courant est défini par la distance euclidienne entre le signal reçu, et le chemin entre le noeud racine et le noeud courant.
Le décodage séquentiel peut être mis en oeuvre dans un décodeur à pile (en anglais « stack decoder »), délivrant une estimation dure (en anglais « hard ») du signal émis, c'est-à-dire une estimation binaire, tel que décrit notamment dans les documents « A fast sequential decoding algorithm using a stack » (F. Jelinek, « IBM Journal Research Development », volume 13 pages 675 à 685, novembre 1969) ou « A unified framework for tree search decoding : rediscovering the sequential decoder » (Arul Murugan et al., « IEEE transaction on information theory », volume 52 pages 933 à 953, mars 2006).
Si aucune contrainte de coût n'est fixée, un tel décodeur présente des performances optimales au sens ML. En revanche, si une contrainte est fixée, afin de limiter le temps de recherche dans l'arbre de décodage par exemple, les performances obtenues sont sous-optimales, c'est-à-dire inférieures aux performances obtenues par la mise en oeuvre d'une technique de type ML.
Une telle technique de décodage sous-optimale est donc moins complexe, et nécessite moins de ressources qu'une technique optimale, mais présente de moins bonnes performances.
Il a également été proposé des décodeurs séquentiels délivrant une estimation souple (en anglais « soft ») du signal émis, c'est-à-dire une estimation probabiliste, comme dans le document « Soft-Input soft-output lattice sphere decoder for linear channels » (J. Boutros et al., IEEE Global Télécommunications Conference, 2003).

Malheureusement, ces décodeurs séquentiels à décision souple présentent une complexité importante. De plus, la liste de chemins potentiels déterminée à partir de l'arbre de décodage, et à partir de laquelle on détermine une estimation probabiliste du signal émis, n'est pas optimisée.

## 3. Exposé de l'invention

L'invention propose une solution nouvelle pour le décodage d'un signal, sous la forme d'un procédé de décodage d'un signal reçu, correspondant à un signal de données émis véhiculé par l'intermédiaire d'un canal de transmission.

On considère que le procédé met en oeuvre une construction progressive d'un arbre de décodage, dans lequel un noeud correspond à une composante d'un symbole dudit signal de données, et est associé à un coût.

Selon l'invention, la construction de l'arbre de décodage met en oeuvre au moins deux itérations des étapes suivantes, pour un noeud courant de l'arbre mémorisé dans une première pile, chaque itération permettant de mémoriser dans une deuxième pile un chemin entre le noeud racine de l'arbre et un noeud feuille :

- sélection d'au moins un noeud fils dudit noeud courant appartenant à un intervalle de sélection prédéterminé, si au moins un tel noeud existe ;
- mémorisation dans ladite première pile des noeuds fils sélectionnés et des coûts associés ;
- suppression, dans ladite première pile, dudit noeud courant ;
- sélection dans ladite première pile, d'un nouveau noeud courant, en tenant compte du coût associé ; et
- si ledit nouveau noeud courant est un noeud feuille, qui ne possède aucun noeud fils, mémorisation du chemin entre le premier noeud dudit arbre, dit noeud racine, et ledit noeud feuille, dans la deuxième pile, et suppression du noeud feuille dans la première pile ;
- sinon, retour à l'étape de sélection d'au moins un noeud fils pour ledit nouveau noeud courant.

Le procédé selon l'invention affecte également une probabilité de vraisemblance aux bits d'au moins un symbole du signal de données, en tenant compte des chemins mémorisés dans la deuxième pile, et comprend une étape de détermination d'une estimation probabiliste du signal de données (monoporteuse ou multiporteuse), en tenant compte du ou des chemins mémorisés dans la deuxième pile et des probabilités de vraisemblance.

L'invention propose ainsi une solution nouvelle pour le décodage d'un signal reçu, basée sur un algorithme de type « stack » (décodage à pile).

Plus précisément, l'invention propose une modification du décodage à pile permettant d'avoir une sortie souple, c'est-à-dire une estimation probabiliste du signal émis, tout en diminuant la complexité de décodage. On note que si une seule itération est réalisée, délivrant un unique chemin entre le noeud racine de l'arbre et un noeud feuille, les performances optimales au sens ML sont obtenues.

Pour ce faire, l'invention propose de limiter le nombre de noeuds développés dans l'arbre de décodage, en ne générant que les noeuds appartenant à un intervalle de sélection prédéterminé. On calcule ainsi et on mémorise dans la première pile les coûts associés aux noeuds appartenant à l'intervalle de sélection.

Il est ainsi possible de ne conserver que les noeuds présentant un coût inférieur ou égal à un seuil C prédéterminé.

Par exemple, ce seuil C correspond au rayon d'une sphère centrée sur le signal reçu. Les chemins pouvant être parcourus dans l'arbre correspondent alors aux vecteurs de symboles (encore appelés points du réseau en référence au réseau de points) se trouvant à l'intérieur de cette sphère.

Selon cet exemple, l'intervalle de sélection est déterminé pour chaque composante d'un symbole du signal de données à partir d'un premier intervalle déterminé à partir de la sphère de rayon C centrée sur ledit signal reçu, et d'un deuxième intervalle déterminé à partir de la constellation des symboles. L'intervalle de sélection est calculé pour chaque noeud (composante) au fur et à mesure de la construction de l'arbre de décodage.

En particulier, le rayon de la sphère peut être choisi arbitrairement ou en fonction d'au moins une caractéristique du canal de transmission.

On sélectionne ainsi pour un noeud courant l'ensemble des noeuds fils appartenant à l'intervalle de sélection, et on construit à partir de ces noeuds fils sélectionnés un chemin entre le noeud racine et un noeud feuille de l'arbre, correspondant à un signal transmis potentiel.

Chaque chemin ainsi construit au cours d'une itération de décodage à pile est mémorisé dans une deuxième pile. Il est ainsi possible de déterminer une liste de signaux transmis potentiels, en mettant en oeuvre plusieurs itérations, permettant chacune de mémoriser un nouveau chemin dans la deuxième pile. Une estimation probabiliste du signal émis est ainsi obtenue. Par exemple, une telle sortie probabiliste est souhaitable si un codage de canal est utilisé.

Selon l'invention, on affecte également une probabilité de vraisemblance aux bits d'au moins un symbole du signal de données en tenant compte des chemins mémorisés dans la deuxième pile. L'estimation du signal de données est alors une estimation probabiliste, ou souple, tenant compte des probabilités de vraisemblance.

On note que le critère d'arrêt des itérations peut être défini de différentes manières.

Par exemple, les itérations sont mises en oeuvre tant que la deuxième pile n'est pas remplie. Ainsi, les itérations sont mises en oeuvre tant que le coût associé audit noeud courant est inférieur ou égal à un seuil prédéterminé.

Selon un autre exemple, si une estimation dure du signal est suffisante, la taille de la pile peut être limitée de façon à ne stocker qu'un seul chemin, et éventuellement le coût associé à ce chemin.

En effet, selon une autre variante de réalisation, le procédé selon l'invention peut mettre en oeuvre une seule itération, délivrant une estimation dure du signal émis.

Ainsi, si une seule itération est mise en oeuvre, un unique chemin entre le noeud racine et un noeud feuille est mémorisé dans la deuxième pile, et l'estimation du signal de données est une estimation binaire.

Selon un mode de réalisation particulier de l'invention, les itérations comprennent une étape d'ordonnancement de la première pile, préalablement à l'étape de sélection d'un nouveau noeud courant, ordonnant lesdits noeuds en fonction du coût associé, le noeud présentant le coût le plus faible étant situé en premier dans la première pile.

De cette façon, lors de l'étape de sélection d'un nouveau noeud courant, on sélectionne le premier noeud dans la première pile.

On rappelle que, classiquement, le coût associé à un noeud est défini par la distance euclidienne (ou une fonction de la distance) entre le signal reçu et le chemin entre le noeud racine et ledit noeud.

Selon une variante de réalisation, les itérations comprennent une étape de détermination des coûts des noeuds fils appartenant à l'intervalle de sélection, et de soustraction d'un biais au coût associé au noeud fils, préalablement à ladite étape de mémorisation.

De cette façon, on limite encore la complexité de décodage, en privilégiant les chemins les plus avancés (c'est-à-dire les noeuds les plus profonds) dans l'arbre. Cette variante permet une réduction de la complexité, mais fournit des performances sous-optimales.

Selon un premier exemple d'application, le procédé selon l'invention est mis en oeuvre dans un système multi-antennes. Ainsi, le signal de données est émis sur au moins une antenne d'émission et reçu sur au moins une antenne de réception.

Par exemple, le signal de données a subi un codage espace-temps avant émission, et la construction de l'arbre est mise en oeuvre lors d'une étape de décodage espace-temps.

Selon un deuxième exemple d'application, le procédé selon l'invention est mis en oeuvre dans un système multi-utilisateurs. Ainsi, le signal de données est émis par au moins deux utilisateurs distincts.

L'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de décodage tel que décrit précédemment.

Un autre mode de réalisation de l'invention concerne encore un dispositif de décodage d'un signal reçu, correspondant à un signal de données émis véhiculé par l'intermédiaire d'un canal de transmission,

comprenant des moyens pour la construction progressive d'un arbre de décodage, dans lequel un noeud correspond à une composante d'un symbole dudit signal de données, et est associé à un coût,

et une première pile dans laquelle est mémorisée un noeud courant dudit arbre.

Selon ce mode de réalisation, les moyens de construction comprennent les moyens suivants, activés pour au moins deux itérations permettant chacune de mémoriser dans une deuxième pile un chemin entre le noeud racine de l'arbre et un noeud feuille :

- des moyens de sélection d'au moins un noeud fils dudit noeud courant appartenant à un intervalle de sélection prédéterminé, si au moins un tel noeud existe ;
- des moyens de mémorisation dans ladite première pile des noeuds fils sélectionnés et des coûts associés ;
- des moyens de suppression, dans ladite première pile, dudit noeud courant ;
- des moyens de sélection dans ladite première pile, d'un nouveau noeud courant, en tenant compte du coût associé ; et
- des moyens de mémorisation du chemin entre le premier noeud dudit arbre, dit noeud racine, et ledit noeud feuille, dans la deuxième pile ;
- des moyens de suppression du noeud feuille dans la première pile ;

et le dispositif comprend également :

- des moyens d'affectation d'une probabilité de vraisemblance aux bits d'au moins un symbole du signal de données, en tenant compte des chemins mémorisés dans la deuxième pile, et
- des moyens de détermination d'une estimation probabiliste du signal de données, à partir du ou des chemins mémorisés dans la deuxième pile et des probabilités de vraisemblance.

Un tel dispositif de décodage est notamment adapté à mettre en oeuvre le procédé de décodage décrit précédemment. Il peut par exemple être intégré dans un récepteur d'un système MIMO ou multi-utilisateurs, comprenant une ou plusieurs antennes de réception.

Ce dispositif pourra bien sûr comporter les différentes caractéristiques relatives au procédé de décodage selon l'invention.

En particulier, ce dispositif peut être composé d'au moins un circuit appartenant au groupe comprenant :

- les FPGA (en anglais « Field programmable gate array », en français « réseau prédiffusé programmable par l'utilisateur ») ;
- les ASIC (en anglais « Application Specific Integrated Circuit », en français « circuits intégrés à application spécifique ») ;
- les VLSI (en anglais « Very Large Scale Integration », en français « intégration à très grande échelle »).

Ainsi, la technique de décodage proposée peut être mise en oeuvre selon une configuration uniquement logicielle, uniquement matérielle (par exemple dans un ou plusieurs circuits intégrés de type FPGA, ASIC ou VLSI avec la mémoire correspondante) ou selon une configuration mixte.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 illustre un réseau sans fil ;
- la figure 2 présente les principales étapes mises en oeuvre par un émetteur pour une première application de l'invention ;
- la figure 3 présente les principales étapes mises en oeuvre par un récepteur pour une première application de l'invention ;
- la figure 4 illustre un exemple d'architecture d'un décodeur mettant en oeuvre un mode de réalisation particulier de l'invention ;
- la figure 5 illustre les différentes étapes mises en oeuvre par le procédé de décodage selon un mode de réalisation particulier de l'invention ;
- la figure 6 illustre la mise en oeuvre d'une itération de décodage à pile de la figure 5 ;
- la figure 7 présente un exemple d'arbre de décodage associé au procédé de décodage selon la figure 5 ;
- les figures 8A à 8F illustrent le contenu de la première pile lors de la construction de l'arbre de la figure 7 ;
- la figure 9 présente les principales étapes mises en oeuvre par un récepteur pour une deuxième application de l'invention ;
- la figure 10 illustre le principe général de l'invention.

## 5. Description d'un mode de réalisation de l'invention

*5.1 Principe général*

Le principe général de l'invention repose sur la modification d'une technique de décodage séquentiel à pile pour réduire la complexité de décodage. Pour ce faire, on limite lors de la construction de l'arbre de décodage le nombre de fils que l'on détermine pour un noeud courant, en ne déterminant que les noeuds appartenant à un intervalle de sélection prédéfini.

En effet, on rappelle que pour la construction d'un arbre de décodage selon la technique décrite dans les documents « *A fast sequential decoding algorithm using a stack* » ou « *A unified framework for tree search decoding : rediscovering the sequential On propose selon* n branches partent de chaque noeud de l'arbre pour une constellation $2^n$ QAM. On propose selon l'invention de réduire le nombre de branches partant de chaque noeud, en ne générant que les noeuds fils appartenant à un intervalle de sélection prédéfini.

Pour ce faire, selon un mode de réalisation particulier de l'invention, on combine les caractéristiques des décodeurs séquentiels et des décodeurs par sphères. On considère ainsi une sphère de rayon C, centrée sur le signal reçu. Lors de la construction progressive de l'arbre de décodage, on ne génère que les noeuds correspondant à des points dans la sphère. En d'autres termes, chaque noeud fils n'est généré et mémorisé dans une première pile que si son coût reste inférieur au rayon C.

La technique classique de décodage par sphères est notamment décrite dans le document « A Universal Lattice Code Decoder for Fading and Channels » (J. Boutros et E.Viterbo, IEEE Transactions on Information Theory, juillet 1999). La principale différence entre l'algorithme proposé et le décodage par sphères classique est la stratégie de parcours des points dans la sphère. En effet, le décodage par sphères utilise la stratégie «Depth First Search » (en français « première recherche en profondeur ») et l'algorithme proposé utilise la stratégie « Best First Search » (en français « meilleure première recherche »).

De cette façon, le temps de recherche et le nombre de calculs pour déterminer un signal candidat sont réduits. On peut également noter que quelque soit le rayon de la sphère, les performances de l'algorithme proposé sont toujours optimales au sens ML, mais c'est la complexité de décodage qui varie. Ainsi, plus le rayon de la sphère est petit, plus l'arbre de décodage sera petit, et plus la complexité de décodage sera réduite.

Par exemple, en utilisant les mêmes formules que celles proposées dans le document « A *Universal Lattice Code Decoder for Fading and Channels* », parcourant les points dans la sphère de rayon C, on obtient pour chaque composante réelle ou imaginaire d'un symbole du signal à décoder un intervalle $I_i$ =[$binf_i$, $Bsup_i$]. Pour ajouter la contrainte liée à la constellation, on considère l'intersection entre l'intervalle [$C\min, C\max$] (correspondant à la constellation moyennant un changement de variable pour se placer dans Z au lieu de 2Z, où Z est l'ensemble des entiers relatifs et 2Z l'ensemble des entiers relatifs pairs) et les intervalles $I_i$. Par exemple, pour une modulation 16QAM $Cmin = 0$ et $Cmax = 3$. L'intervalle final auquel les noeuds du $i^{ème}$ niveau peuvent appartenir est :

$$I_{ifinal} = [\max(C\min, B\inf_i), \min(C\max, B\sup_i)].$$

Il comprend donc un ensemble d'entiers auxquels peuvent appartenir les parties réelles ou imaginaires d'un symbole.

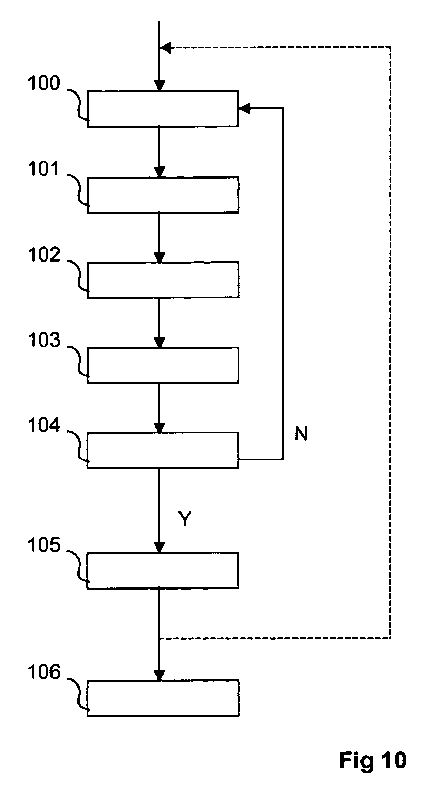

On présente ci-après, en relation avec la figure 10, les principales étapes mises en oeuvre par le procédé de décodage selon l'invention.

La construction de l'arbre de décodage met en oeuvre au moins une itération des étapes suivantes, pour un noeud courant de l'arbre mémorisé dans une première pile.

L'algorithme débute au niveau du noeud racine. Le premier noeud courant est donc le noeud racine.

Au cours d'une première étape 100, on détermine l'intervalle de sélection (à partir par exemple du rayon de la sphère) auquel les noeuds fils du noeud courant vont appartenir. On génère par la suite les noeuds fils appartenant à cet intervalle de sélection et on calcule les coûts associés à chacun de ces noeuds.

Les noeuds fils appartenant à cet intervalle de sélection sont mémorisés au cours d'une étape 101 dans la première pile. Ces noeuds fils représentent des branches autorisées pour le premier niveau de l'arbre.

Le noeud courant est ensuite supprimé de la première pile au cours d'une étape 102, puis un nouveau noeud courant est sélectionné dans la première pile au cours d'une étape 103. Le nouveau noeud sélectionné est le noeud qui présente le coût le plus faible.

On teste (104) ensuite si le nouveau noeud courant est une feuille :

O si le nouveau noeud courant est un noeud feuille, qui ne possède aucun noeud fils, on mémorise (105) le chemin entre le noeud racine et le noeud feuille, dans une deuxième pile, puis on supprime le noeud feuille de la première pile ;

O sinon, on retourne à l'étape de sélection (100) d'au moins un noeud fils pour le nouveau noeud courant.

Il est possible de mettre en oeuvre une seule ou plusieurs itérations de ces étapes 100 à 105.

Chaque itération permet de mémoriser dans la deuxième pile un chemin entre le noeud racine et un nouveau noeud feuille.

Il est alors possible, au cours d'une étape 106 de déterminer une estimation du signal de données, en tenant compte du ou des chemins mémorisés dans la deuxième pile. Ainsi, l'estimation du signal peut être une estimation binaire (décision dure) si la construction de l'arbre met en oeuvre une seule itération permettant de déterminer un unique chemin, ou bien être une estimation probabiliste (décision souple) si la construction de l'arbre met en oeuvre plusieurs itérations, permettant chacune de déterminer un chemin.

En particulier, on peut noter que le procédé selon l'invention peut être mis en oeuvre de diverses manières, notamment sous forme câblée ou sous forme logicielle.

La technique de décodage proposée permet donc une construction progressive « horizontale » de l'arbre de décodage, dans le sens où l'on détermine pour un noeud courant l'ensemble des noeuds fils appartenant à l'intervalle de sélection.

De plus, on stocke dans la première pile chaque noeud associé à son coût. De cette façon, il n'est pas nécessaire de recalculer les données relatives à un noeud à chaque fois que l'on visite ce noeud.

Ainsi, la technique de décodage selon l'invention repose sur une nouvelle approche du décodage à pile, permettant de diminuer la complexité du décodage, en diminuant la zone de recherche et le nombre de noeuds reconstruits, notamment lorsqu'une seule itération est mise en oeuvre. On combine ainsi les avantages d'un décodage à pile, en optimisant la construction de l'arbre de décodage, et d'un décodage par sphères, en limitant le nombre de noeuds considérés.

De plus, l'invention proposée permet d'avoir une sortie probabiliste (ou souple), lorsque plusieurs itérations sont mises en oeuvre. En effet, la mise en oeuvre de plusieurs itérations permet de mémoriser dans une deuxième pile une liste de chemins candidats. Une telle sortie probabiliste peut s'avérer nécessaire par exemple si un codage de canal est utilisé en amont.

L'invention peut notamment être intégrée dans un récepteur, par exemple pour le décodage de données transmises dans un canal MIMO (en anglais « Multiple Input Multiple Output » pour « entrée multiple sortie multiple ») ou pour une détection de multiples utilisateurs.

En particulier, si les données transmises dans un canal MIMO sont codées par un code STBC (en anglais « Space Time Block Code » en français « codes spatio-temporels en blocs ») et émises sur un grand nombre d'antennes (au moins quatre antennes d'émission par exemple), la technique de décodage proposée permet de réduire la complexité du décodage. Par conséquent, la technique proposée permet de mettre en oeuvre des transmissions sans fil à haut débit présentant un faible taux d'erreur avec un récepteur de complexité raisonnable.

On décrit ci-après deux exemples d'application de l'invention, l'un relatif au décodage d'un signal reçu dans un système multi-antennes, l'autre au décodage d'un signal reçu dans un système multi-utilisateurs.

En cas d'application à un décodage MIMO, les dimensions des signaux reçus correspondent à K (en notation réelle pour une modulation nQAM ou nPSK, en anglais « Phase Shift Keying », en français « modulation par déplacement de phase ») ou Q (en notation complexe pour une modulation nQAM ou nPSK ou en notation polaire pour une modulation nPSK). En cas d'application à une détection de plusieurs utilisateurs, les dimensions du signal reçu correspondent au nombre d'utilisateurs (Q en notation complexe ou notation polaire (si les utilisateurs utilisent une modulation nPSK)) ou K = 2Q en notation réelle.

*5.2 Application aux systèmes multi-antennes*

On décrit ci-après un exemple de mise en oeuvre de l'invention dans le cadre d'une transmission MIMO mettant en oeuvre un code STBC en émission.

On rappelle en effet que les techniques de transmission multi-antennes permettent d'atteindre une capacité de transmission accrue en augmentant l'efficacité spectrale dans le canal de transmission, grâce à l'utilisation de codes espace/temps en émission. Ces codes espace/temps permettent notamment de répartir les symboles modulés sur les différents degrés de liberté du canal.

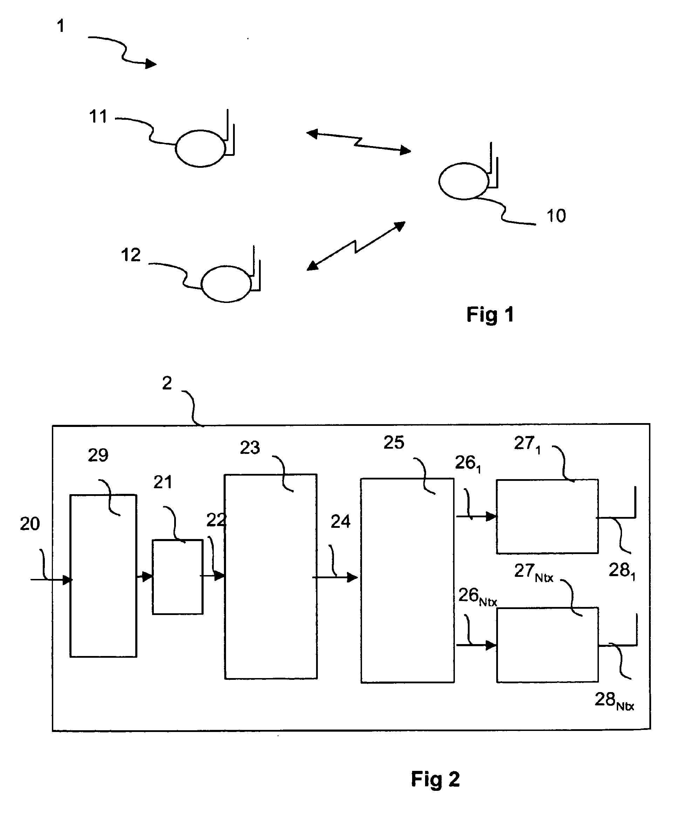

La figure 1 représente un réseau sans fil 1 comprenant plusieurs stations 10 à 12. Chaque station 10 à 12 comprend un émetteur et un récepteur comprenant une ou plusieurs antennes. Par exemple, la station 10 communique avec les stations 11 et 12 par le biais d'une liaison sans fil.

La figure 2 illustre plus précisément les différentes étapes mises en oeuvre côté émission. Un tel émetteur 2 peut émettre un signal à destination d'un récepteur par l'intermédiaire d'un canal MIMO bruité. L'émetteur de données 2 peut notamment être intégré dans les stations 10 à 12. Selon l'exemple présenté, l'émetteur 2 met en oeuvre :

- un codage convolutif 29,
- une modulation QAM 21, délivrant des symboles 22,
- un codage espace/temps 23, délivrant un mot de code 24 ;
- une conversion temps/fréquence 25 ;
- une modulation OFDM ($27_1$ à $27_{Ntx}$) de chaque signal $26_1$ à $26_{Ntx}$ issu de la conversion temps/fréquence 25 ; et
- une émission sur Ntx antennes d'émission $28_1$ à $28_{Ntx}$, chaque antenne d'émission étant associée à un modulateur OFDM $27_1$ à $27_{Ntx}$.

Plus précisément, l'émetteur 2 reçoit en entrée un signal binaire 20. Le signal binaire 20 est tout d'abord codé par un code convolutif 29, présentant par exemple un rendement égal à 1/2 avec comme polynômes générateurs (7,5) en notation octale. Ensuite, le signal est modulé par le modulateur 21 selon un premier schéma de modulation, par exemple une modulation d'amplitude en quadrature nQAM avec n égal à 16, 32, 64 ou 256, etc. Le modulateur 21 peut également mettre en oeuvre un schéma de modulation par déplacement de phase, par exemple de type nPSK, ou une modulation quelconque. L'étape de modulation 21 permet notamment de générer des symboles complexes appartenant au groupe de symboles S 1 à SQ. Par exemple, dans le cadre d'une modulation 4QAM, S 1 =1 + i, S2 = 1 - i, S3 = -1- i, et S4 = -1 + i.

Les symboles modulés 22 sont ensuite codés par le codeur espace-temps 23 pour former un mot de code STBC 24. Le code STBC est, par exemple, le Golden Code tel que décrit dans le document « The Golden Code : A 2 x 2 Full-Rate Space-Time Code with Non-Vanishing Determinants » (J.-C. Belfiore, G. Rekaya, E. Viterbo, IEEE Transactions on Information Theory, vol. 51, n° 4, pages 1432-1436, avril 2005). Le code STBC peut également être un code tel que décrit dans le document « Space-Time block codes from orthogonal designs » (V.Tarokh, H. Jafarkhani et R. A. Calderbank, IEEE Transactions on Information Theory, vol. 45, pages 1456 à 1467, juillet 1999). Le code STBC est ainsi basé sur une matrice complexe de dimension $Ntx*N$, où $Ntx$ est le nombre d'antennes d'émission et $N$ est la longueur temporelle du code STBC.

Ainsi, le codage espace/temps peut être basé sur un code en bloc. Selon une variante, le codage espace/temps est un multiplexage spatial. Dans ce cas, les symboles modulés sont directement envoyés sur les antennes en émission.

Le mot de code généré 24 est ensuite converti du domaine temporel vers le domaine fréquentiel et distribué sur les $Ntx$ antennes d'émission. Chaque signal dédié $26_1$ à $26_{Ntx}$ est alors modulé par un modulateur OFDM $27_1$ à $27_{Ntx}$, puis émis sur l'antenne d'émission $28_1$ à $28_{Ntx}$ correspondante, éventuellement après filtrage, transposition de fréquence et amplification (étapes classiquement mises en oeuvre pour un signal radiofréquence).

L'architecture d'un émetteur selon cet exemple est plus précisément décrite dans le document « Space-frequency coded broadband OFDM systems » (H. Bölcskei et A. J. Paulraj, Proceedings on Wireless Commun. Networking Conf., Chicago, 23 au 28 septembre 2000, pages 1 à 6).

Bien entendu, la technique de décodage selon l'invention ne se limite pas à la réception d'un signal émis par un émetteur tel qu'illustré en figure 2. Par exemple, il est possible de remplacer la modulation multiporteuse OFDM par toute autre modulation monoporteuse ou multiporteuse, comme l'OFDM avancée, mettant en oeuvre un filtrage par une fonction prototype comme la fonction IOTA (en anglais « Isotropic Orthogonal Transform Algorithm »). Dans le cas d'une modulation monoporteuse, le convertisseur temps/fréquence 25 et les modulateurs OFDM $27_1$ à $27_{Ntx}$ sont remplacés par au moins deux modulateurs à porteuse unique associés chacun à une antenne, dans le cadre d'un système MIMO. L'architecture d'un émetteur selon cet exemple est plus particulièrement décrite dans le document « Space-Time block coding : A simple transmitter diversity technique for wireless communications » (S. Alamouti, IEEE Journal On Select Areas In Communications, vol. 16, pages 1451 à 1458, octobre 1998).

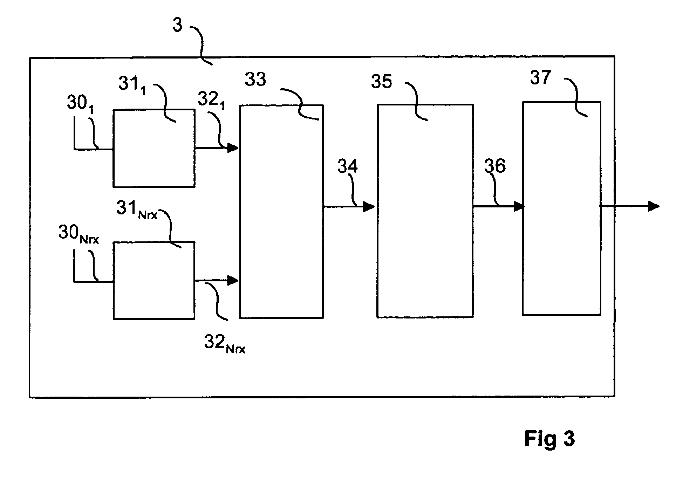

On présente désormais, en relation avec la figure 3, les étapes mises en oeuvre par un récepteur 3 lors de la réception d'un signal. Un tel récepteur 3 peut notamment être intégré dans les stations 10 à 12.

Selon l'exemple illustré, le récepteur 3 reçoit un signal y émis par l'émetteur 2 dans un canal sans fil. Un tel canal est généralement bruité. Il s'agit d'un canal à bruit blanc additif gaussien (ou AWGN de l'anglais « Additive White Gaussian Noise »), soumis à des évanouissements (en anglais « fading »). Le signal émis par l'émetteur 2 peut également être affecté par des échos dus aux trajets multiples et/ou à l'effet Doppler.

Selon l'exemple présenté, le récepteur 3 met en oeuvre :

- une réception sur $Nrx$ antennes de réception $30_1$ à $30_{Nrx}$, chaque antenne de réception étant associée à un démodulateur OFDM $31_1$ à $31_{Nrx}$ ;
- une démodulation OFDM $31_1$ à $31_{Nrx}$ du signal reçu sur chaque antenne de réception, délivrant des signaux démodulés $32_1$ à $32_{Nrx}$ ;
- une conversion fréquence /temps 33, mettant en oeuvre une opération inverse de la conversion temps /fréquence mise en oeuvre en émission, délivrant un signal 34 dans le domaine fréquentiel ;
- un décodage espace/temps 35, délivrant un signal décodé 36 ;
- une démodulation associée à un décodage 37.

Selon l'exemple illustré, le récepteur 3 met en oeuvre un traitement inverse au traitement mis en oeuvre en émission. Ainsi, si une modulation monoporteuse est mise en oeuvre en émission au lieu d'une modulation multiporteuse, les démodulateurs OFDM $31_1$ à $31_{Nrx}$ sont remplacés par des démodulateurs monoporteuses correspondants.

Plus précisément, le récepteur 3 comprend $Nrx$ antennes de réception $30_1$ à $30_{Nrx}$. De cette façon, le signal reçu peut être représenté par une matrice de taille $Nrx \times N$, ou de manière équivalente par un vecteur R de taille $(Nrx \times N) \times 1$, où $N$ est, par exemple, égal à 2 et représente la plage temporelle et/ou fréquentielle occupée par le code espace/temps.

La transmission entre le codeur 23 et le décodeur 35 peut alors être modélisée par l'équation suivante :

$$R = \underbrace{\begin{pmatrix} H_1 & 0 & \cdots & 0 \\ 0 & H_2 & \ddots & \vdots \\ \vdots & \ddots & \ddots & 0 \\ 0 & \cdots & 0 & H_N \end{pmatrix}}_{G} CS + v = GS + v \qquad (1)$$

avec :

- R le vecteur complexe de taille $(Nrx \times N) \times 1$, reçu sur les Nrx antennes de réception ;
- $H_i$ la matrice de canal complexe de taille $Nrx \times Ntx$ à l'intervalle temps/fréquence $i$, où la fréquence correspond à une porteuse de la modulation multiporteuse. Si la modulation mise en oeuvre est une modulation à porteuse simple, l'intervalle $i$ correspond à un intervalle de temps ;
- $H = diag(H_1,..., H_N)$ la matrice de canal complexe diagonale par bloc de taille $(N \times Nrx) \times (N \times Ntx)$ aux intervalles temps/fréquence 1 à N ;
- $C$ la matrice de codage espace/temps complexe de taille $(Ntx \times N) \times Q$, où $Q$ est le nombre de symboles complexes entrés par mot de code STBC ;
- $S$ le vecteur d'entrée complexe des symboles modulés discrets, de taille $Q$ x 1 ;
- v le vecteur complexe de bruit blanc additif gaussien de taille $(N \times Nrx) \times 1$, avec la matrice d'autocorrélation $R_v = \sigma^2\ INNrx,$ où INNrx est la matrice unité de taille $(N \times Nrx) \times (N \times Nrx)$, et $\sigma^2$ représente la variance du bruit AWGN.

Il est à noter que dans le cas où le codage spatio-temporel met en oeuvre des entrées réelles, au lieu d'entrées complexes, la matrice C de codage espace/temps est une matrice réelle ayant une dimension $(2Ntx \times N) \times 2Q$.

De plus, lorsque le bruit additif et les interférences affectant le signal reçu ne sont pas blancs, un filtre de blanchiment peut être mis en oeuvre devant le décodeur espace/temps 35. La variable $\sigma^2$ représente alors la variance du bruit blanchi résultant.

L'algorithme de décodage à pile selon l'invention peut être mis en oeuvre lors de l'étape de décodage espace/temps 35. On considère alors que le décodeur espace/temps est un décodeur à pile, qui permet d'effectuer un décodage ML du signal codé.

Ce décodeur fournit un ou plusieurs signaux candidats, sous la forme de chemins mémorisés dans une deuxième pile.

Ces chemins peuvent notamment être utilisés pour affecter une probabilité de vraisemblance aux bits d'un symbole estimé.

Le décodeur STBC 35 fournit alors le chemin obtenu, ou les probabilités de vraisemblance obtenues au démodulateur/décodeur 37.

Le démodulateur/décodeur 37 est par exemple un décodeur Viterbi souple, mettant en oeuvre des opérations inverses aux étapes de modulation 21 et codage convolutif 29.

Ce démodulateur/décodeur 37 fournit une estimation dudit signal de données, en tenant compte du ou desdits chemins mémorisés dans ladite deuxième pile. Cette estimation peut être binaire ou probabiliste, selon le nombre d'itérations mises en oeuvre.

Par exemple, si la chaîne de transmission ne comporte pas de codage convolutif, une seule itération suffit pour décoder le message, et le premier chemin trouvé permet d'obtenir une estimation binaire du signal envoyé.

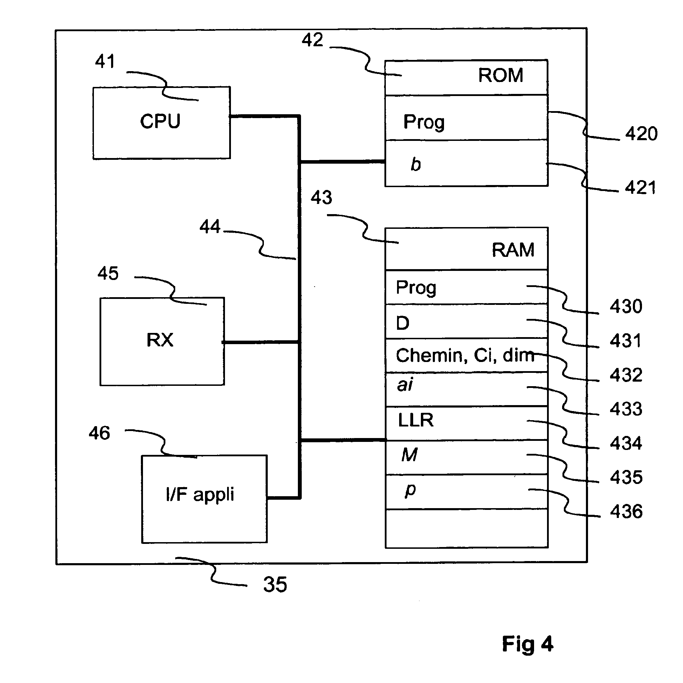

La figure 4 illustre plus précisément un exemple d'architecture du décodeur espace/temps 35 du récepteur 3. Selon cet exemple, le décodeur espace/temps 35 comprend les éléments suivants qui sont reliés ensemble par un bus de données et d'adresses 44 :

- un microprocesseur 41 (ou CPU), qui est, par exemple, un processeur de signal numérique (ou DSP, en anglais « digital signal processor ») ;
- une mémoire non volatile 42 (ou ROM, en « anglais Read Only Memory ») ;
- une mémoire vive 43 (ou RAM, en anglais « Random Access Memory ») ;
- une interface 45 pour la réception des signaux d'entrée provenant du convertisseur temps/fréquence 33 ;
- une interface 46 pour la transmission des données décodées au démodulateur/décodeur 37.

Dans chacune des mémoires mentionnées, le mot « registre » utilisé dans la description peut correspondre à une zone de petite capacité (quelques bits) ou à une zone très étendue (par exemple tout un programme ou une grande quantité de données reçues ou décodées).

La mémoire non volatile ROM 42 comprend :

- un programme Prog 420 ;
- un biais b 421.

Les algorithmes pour la mise en oeuvre du procédé selon ce mode de réalisation de l'invention peuvent être stockés dans le registre 420. Lorsqu'il est mis sous tension, le processeur CPU 41 télécharge le programme 420 dans la mémoire RAM et exécute les instructions correspondantes.

La mémoire vive RAM 43 comprend :

- dans un registre Prog 430, le programme exécuté par le microprocesseur 41 et téléchargé après la mise sous tension du décodeur espace/temps 35 ;
- des données d'entrée dans un registre 431 ;
- des données relatives aux noeuds dans un registre 432, correspondant à une première pile ;
- des données relatives aux chemins déterminés à chaque itération, désignés par $a_i$, dans un registre 433 correspondant à une deuxième pile ;
- des probabilités de vraisemblance ou LLR dans un registre 434 ;
- le nombre maximal de chemins pouvant être mémorisés dans la deuxième pile, désigné par M dans un registre 435 ; et
- un compteur $p$ utilisé pour compter le nombre de chemins mémorisés dans la deuxième pile, défini dans un registre 436.

Plus précisément, les données stockées dans le registre 432 comprennent, pour un noeud de l'arbre de décodage, le coût associé à ce noeud, le chemin de la racine à ce noeud, et éventuellement la dimension de ce noeud, c'est-à-dire sa profondeur dans l'arbre. On rappelle que le coût associé à un noeud courant est défini par la distance euclidienne entre le signal reçu, et le chemin entre le noeud racine et le noeud courant.

Selon un autre mode de réalisation, la technique de décodage selon l'invention peut être mise en oeuvre selon une configuration uniquement matérielle (par exemple dans un ou plusieurs circuits intégrés de type FPGA, ASIC ou VLSI avec la mémoire correspondante) ou selon une configuration utilisant à la fois des VLSI et DSP.

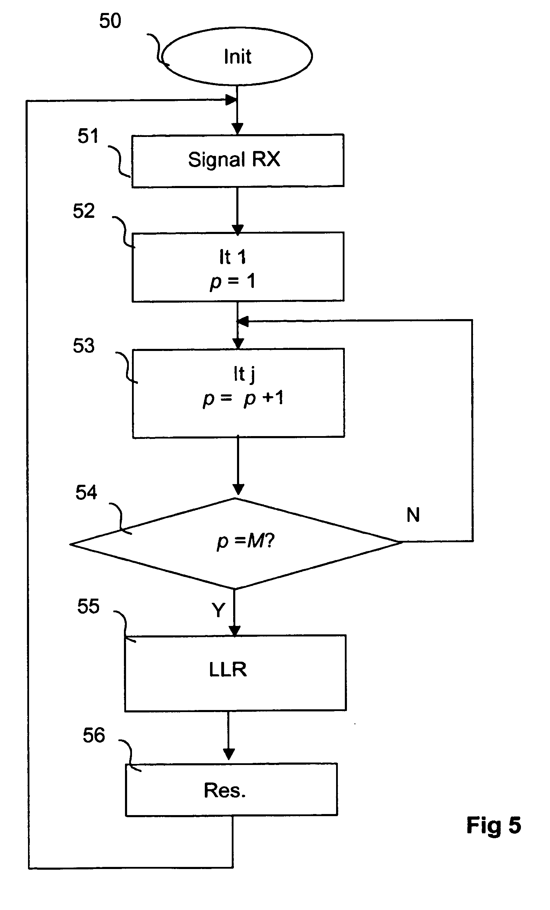

La figure 5 illustre plus précisément les différentes étapes mises en oeuvre par le procédé de décodage selon un mode de réalisation particulier de l'invention. On considère selon ce mode de réalisation que plusieurs itérations sont mises en oeuvre, permettant chacune de déterminer un chemin entre un noeud racine et un noeud feuille de l'arbre, correspond à un signal transmis potentiel.

Ainsi, selon cet exemple de mise en oeuvre, le décodeur délivre une décision souple (en anglais « soft »), c'est-à-dire une estimation probabiliste d'un symbole transmis.

Pour ce faire, le décodeur espace/temps 35 met en oeuvre au moins deux itérations de décodage à pile :

- une première itération permettant de mémoriser un premier chemin entre le noeud racine de l'arbre et un noeud feuille, correspondant à un premier signal candidat ;
- au moins une deuxième itération permettant de mémoriser au moins un deuxième chemin entre le noeud racine de l'arbre et un autre noeud feuille, correspondant à au moins un deuxième signal candidat.

Plus précisément, au cours d'une étape d'initialisation 50, les différents paramètres du procédé sont initialisés. Par exemple, le compteur $p$ est mis à zéro.

Durant une étape suivante 51, le décodeur attend de recevoir un signal, issu par exemple du convertisseur temps/fréquence 33.

Une fois le signal reçu, le décodeur met en oeuvre une première itération de décodage à pile 52. Au cours de cette première itération, le meilleur chemin entre le noeud racine de l'arbre et une feuille est mémorisé dans la deuxième pile. Le compteur d'itérations $p$ est mis à la valeur 1 ($p$ = 1). Cette première itération peut mettre en oeuvre en algorithme de décodage à pile classique. Avantageusement, elle met en oeuvre une réduction du nombre de noeuds fils générés en ne sélectionnant que les noeuds fils appartenant à un intervalle prédéterminé.

Si le nombre maximal d'itérations $M$ est égal à 1, une seule itération est effectuée, et une sortie binaire de l'algorithme est donnée.

Ensuite, le décodeur met en oeuvre une deuxième itération de décodage à pile 53. Au cours de cette deuxième itération, le meilleur chemin entre le noeud racine de l'arbre et une nouvelle feuille est mémorisé dans la deuxième pile. Le compteur d'itérations $p$ est incrémenté d'une unité ($p$ = $p$ + 1). Cette nouvelle itération 53 est donc basée sur un arbre réduit excluant les chemins précédemment mémorisés dans la deuxième pile. En d'autres termes, la deuxième itération applique une technique de décodage à pile à l'arbre utilisé par la première itération de décodage à pile, en excluant le chemin obtenu lors de la première itération.

On teste alors au cours d'une étape de test 54 si le compteur d'itérations $p$, a atteint le nombre maximal d'itérations $M$.

Le nombre d'itération maximum est égal au nombre de noeuds feuilles dans l'arbre de décodage.

Afin de limiter le temps de décodage, il est possible de limiter le nombre d'itérations en limitant la taille de la deuxième pile : chaque chemin obtenu lors d'une itération étant mémorisé dans la deuxième pile, le nombre d'itérations peut être limité par la taille de la deuxième pile.

Selon une autre variante permettant également de limiter le temps de décodage, on peut fixer un coût maximal que le ou les noeuds feuilles ne doivent pas dépasser, et ne générer que les chemins présentant un coût inférieur ou égal à ce seuil prédéterminé. En d'autres termes, on mémorise un premier chemin dans la deuxième pile lors de la première itération, puis un deuxième chemin lors de l'itération suivante, puis un troisième chemin lors de l'itération suivante, et ainsi de suite, tant que le coût associé au dernier chemin mémorisé reste inférieur ou égal à ce seuil prédéterminé.

Ainsi, si le compteur d'itérations $p$ n'a pas atteint le nombre maximal d'itérations $M$, le décodeur met en oeuvre une nouvelle itération de décodage à pile 53, et incrémente le compteur d'itérations d'une unité. La j$^{ème}$ itération de décodage à pile est appliquée au signal reçu en excluant la ou les chemins déterminé(s) durant la ou les (j-1) itérations précédentes du décodage à pile.

Si le compteur d'itérations $p$ n'a pas atteint le nombre maximal d'itérations $M$, ce qui signifie que tous les chemins ont été déterminés et mémorisés dans la deuxième pile, on affecte une probabilité de vraisemblance à chaque bit du symbole estimé, au cours d'une étape 55.

Par exemple, si le chemin obtenu lors d'une première itération est le chemin défini par les bits [1011], et le chemin obtenu lors d'une deuxième itération est le chemin défini par les bits [1111], on peut affecter une forte probabilité de vraisemblance aux premier, troisième et quatrième bits. En revanche, on affectera une probabilité de vraisemblance plus faible au deuxième bit, qui est égal à 0 selon le chemin défini par la première itération, et égal à 1 selon le chemin défini par la deuxième itération.

Ces probabilités a posteriori peuvent notamment s'exprimer sous la forme de logarithme du rapport de vraisemblance (ou LLR, en anglais « Log Likelihood Ratio »). Ainsi, une fois que tous les chemins sont déterminés (c'est-à-dire que toutes les itérations sont mises en oeuvre), un LLR est calculé pour chaque symbole de la modulation.

En notant y le signal reçu et H la matrice de canal, le LLR du i$^{ème}$ bit $b_i$ peut s'exprimer sous la forme suivante, comme décrit dans les documents « Soft-Input soft-output lattice sphere decoder for linear channels » (J. Boutros et al., IEEE Global Telecommunications Conference, 2003) et « Achieving near-capacity on a multiple-antenna channel » (B. Hochwald et al., IEEE Transactions on communication, mars 2003) :

$$LLR(b_i) = \log \frac{P(b_i = 1 | y, H)}{P(b_i = 0 | y, H)}$$

Ces étapes de test 54 et de détermination des probabilités de vraisemblance 55 sont par exemple effectuées par un DSP et/ou par un VLSI (par exemple de type ASIC ou FPGA).

Finalement, durant une étape 56, les probabilités de vraisemblance affectées aux différents bits sont transmises au démodulateur/décodeur 37. De cette façon, il est possible de déterminer une estimation du signal de données, tenant compte des différents chemins mémorisés dans la deuxième pile.

Après l'étape 56 de transmission du résultat, l'étape d'initialisation 51 peut être réitérée.

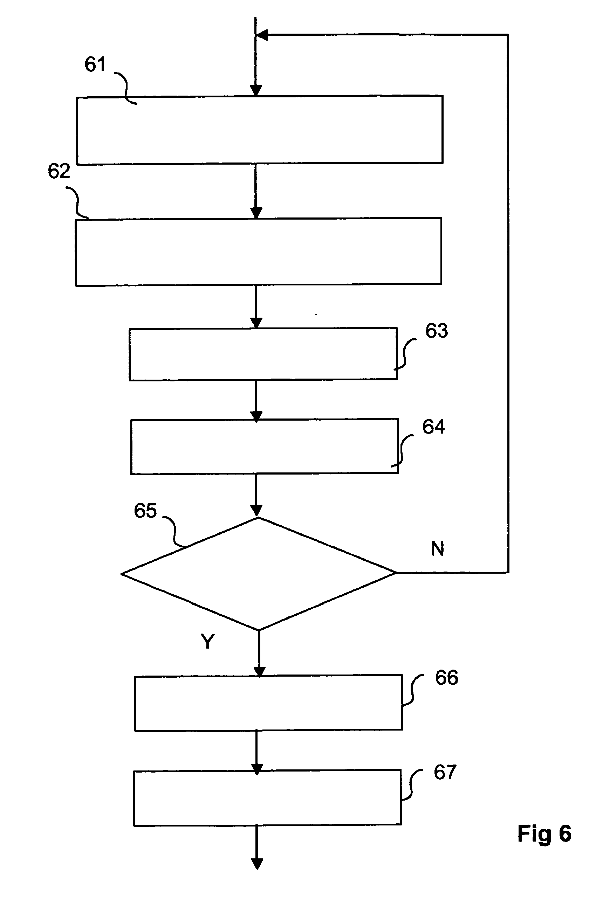

On décrit ci-après de manière détaillée, en relation avec la figure 6, les étapes mises en oeuvre lors des itérations 52 et 53.

Pour ce faire, on considère de nouveau que le signal reçu peut s'exprimer sous la forme suivante :

$$R = \underbrace{\begin{pmatrix} H_1 & 0 & \cdots & 0 \\ 0 & H_2 & \ddots & \vdots \\ \vdots & \ddots & \ddots & 0 \\ 0 & \cdots & 0 & H_N \end{pmatrix} C}_{G} S + v = GS + v \qquad (1)$$

On suppose également que le décodeur connaît la matrice de *canal H = diag*($H_1$,..., $H_N$). Pour ce faire, une technique classique d'estimation de canal, basé sur la connaissance de symboles pilotes peut être mise en oeuvre.

Chaque mot de code espace/temps est donc obtenu par une multiplication matricielle CS.

On peut noter que le codage du signal entrant S peut être représenté par des multiplications de matrices complexes ou par des matrices réelles dans lesquelles les parties réelle et imaginaire sont codées séparément. Par exemple, le schéma de codage décrit dans le document « *Space-Time block coding : A simple transmitter diversity technique for wireless communications* » précédemment cité ne peut être représenté qu'avec des notations réelles.

Ainsi, une écriture plus générale de l'équation (1) donne :

$$\underbrace{\begin{pmatrix} R^R \\ R^I \end{pmatrix}}_{R'} = \underbrace{\begin{pmatrix} H^R & -H^I \\ H^I & H^R \end{pmatrix}C'}_{G'} \underbrace{\begin{pmatrix} S^R \\ S^I \end{pmatrix}}_{S'} + \underbrace{\begin{pmatrix} v^R \\ v^I \end{pmatrix}}_{v'} \qquad (2)$$

où :

- C' est la matrice de codage espace/temps avec des notations réelles,
- $(.)^R$ et $(.)^I$ désignent respectivement les parties réelle et imaginaire d'un nombre ou d'une matrice complexe.

Avec des notations réelles, la dimension du signal entrant S' est K = 2Q. Lorsque S est modulé en utilisant une modulation d'amplitude en quadrature, chacune des composantes de S' est soumise à une modulation d'impulsions en amplitude (PAM). La matrice G' correspond alors à une base du réseau de dimension K = 2Q.

Il est à noter que les algorithmes de décodage séquentiels utilisent de manière avantageuse une matrice triangulaire en tant que base. Par conséquent, il est préférable de réaliser une décomposition de la matrice d'évanouissement G', encore appelée matrice de canal équivalent (tenant compte de la matrice de canal et de la matrice de codage espace/temps).

De cette façon, il est préférable de construire l'arbre de décodage à partir d'une décomposition QR de la matrice G'.

On obtient ainsi (où l'opérateur $^t$ désigne la transposée) :

$$R_p = Q'R' = US' + \eta$$

$$R_p = U^{-t}G'^t R' = US' + \eta$$

où :

- G' = QU est la décomposition QR de la matrice G' ;
- U est une matrice triangulaire supérieure de taille $K \times K$ ;
- Q est une matrice orthogonale telle que $Q \times Q^t = I_k$ ;
- Rp est le nouveau vecteur d'observation de taille $K \times 1$ ; et

- $\eta$ est le vecteur de bruit de taille $K \times 1$ avec l'autocorrélation $R_\eta = \dfrac{\sigma^2}{2}I_K$.

La matrice triangulaire U correspond alors à la nouvelle base utilisée par l'algorithme de décodage séquentiel.

Selon une variante, la dimension temps/fréquence N est remplacée par une dimension temps si une modulation à porteuse unique est utilisée.

A partir du nouveau signal observé $R_p$ et de la connaissance du canal, le décodeur peut construire un arbre de décodage et trouver une bonne estimation du signal transmis S.

Il est également possible d'utiliser une décomposition de Cholesky de la matrice de Gram pour décomposer la matrice G' et obtenir une matrice triangulaire en tant que base.

Pour ce faire, le CPU exécute une décomposition triangulaire. Cette opération fournit une matrice triangulaire U correspondant à la matrice de Gram. Plus précisément, grâce à la structure de G', une matrice triangulaire U est

définie comme suit :

$$G'^t\, G' = U^t U$$

Ensuite, le signal reçu est projeté dans la matrice triangulaire U déterminée à l'étape précédente. Cette projection multiplie d'abord le signal reçu R' par $G^t$ et ensuite par l'inverse de $U^t$.

Comme illustré en relation avec la figure 6, lors des itérations 52 et 53 de décodage à pile, on détermine tout d'abord (61), les noeuds fils d'un noeud courant.

Lors de la première étape de sélection 61, le noeud courant correspond au noeud racine.

Chaque noeud est associé à un coût (ou métrique), à un chemin, et éventuellement à une dimension (ou profondeur). La dimension correspond au nombre de niveaux entre le noeud en question et la racine, profondeur de l'arbre. La métrique d'un noeud correspond à la distance euclidienne (ou, selon une variante, à une fonction de la distance telle que, par exemple, le carré de la distance) entre les signaux reçus et le chemin entre le noeud racine et le noeud considéré. Dans l'arbre, il y a un seul chemin entre le noeud racine et le noeud considéré. Ce chemin permet de déterminer les bits décodés correspondants (ou une estimation de la séquence d'information transmise) entre le noeud racine et le noeud considéré.

Durant une étape suivante 62, les coûts des noeuds fils appartenant à un intervalle prédéterminé sont calculés. Le coût associé à un noeud fils est égal à la somme du coût de son noeud parent et de la contribution du chemin entre son noeud parent et lui-même (distance euclidienne entre le signal reçu et le chemin relatif à la transition entre le noeud parent et le noeud fils considéré). Ce mode de réalisation permet un décodage au sens ML.

Selon une variante de l'invention, un biais (ou un multiple d'un biais fixe désigné par *b*) est soustrait au coût associé au noeud fils. Le coût associé à un noeud fils avec une dimension *dim* comporte un biais total égal à la dimension *dim* multipliée par *b*. Cette variante permet une réduction de la complexité, mais fournit de moins bonnes performances que le décodage au sens ML. La complexité de décodage est donc diminuée, mais le décodage est sous-optimal. Le biais est choisi en fonction d'un taux d'erreur binaire (BER, ou « Binary Error Rate ») désiré, afin d'obtenir un bon rapport signal à bruit (SNR) tout en conservant une complexité raisonnable. Plus précisément, lorsqu'un biais est introduit, les chemins les plus avancés dans l'arbre sont privilégiés et un noeud feuille est atteint plus rapidement. De cette façon, le décodeur peut fournir une solution d'autant plus rapide que le biais est élevé.

Une fois les coûts associés aux noeuds fils calculés, on mémorise dans une première pile les données relatives aux noeuds fils (coût, chemin, éventuellement dimension). On supprime ensuite le noeud courant dans la première pile au cours d'une étape 63.

Au cours d'une étape suivante 64, on sélectionne dans la première pile un nouveau noeud courant en tenant compte du coût associé. Selon le mode de réalisation décrit, on choisit le noeud qui a le coût le plus faible.

Si la première pile est ordonnancée en fonction des coûts, de façon que le noeud présentant le coût le plus faible soit situé au sommet de la pile, le noeud sélectionné au cours de l'étape 64 est le premier noeud de la pile.

Au cours d'une étape de test 65, le décodeur vérifie si le nouveau noeud courant est un noeud feuille. Si ce n'est pas le cas, on retourne à l'étape 61 de sélection d'au moins un noeud fils pour le nouveau noeud courant.

Si le nouveau noeud courant est un noeud feuille, on mémorise dans une deuxième pile, au cours d'une étape 66, le chemin entre le noeud racine de l'arbre, et le noeud feuille. En d'autres termes, un signal candidat est sélectionné et stocké en mémoire. On supprime ensuite ce noeud feuille de la première pile.

Le compteur d'itérations *p* est alors mis à jour au cours d'une étape 67. On rappelle que *p* est égal à 1 pour la première itération (52), puis incrémenté d'une unité lors des itérations suivantes (53).

Les noeuds fils considérés appartiennent à un intervalle prédéterminé, ce qui revient à dire qu'un noeud fils n'est pris en considération que lorsque sa métrique est égale ou inférieure à un seuil désigné par C. De cette façon, on ne stocke dans la première pile que les données relatives aux noeuds fils présentant un coût inférieur au seuil C.

Ce seuil correspond par exemple au rayon d'une sphère centrée sur le signal reçu, et les chemins parcourus dans l'arbre correspondent aux points du réseau se trouvant à l'intérieur de cette sphère.

Par exemple, en utilisant les mêmes formules que celles proposées dans le document « *A Universal Lattice Code Decoder for Fading and Channels* », on obtient pour chaque composante réelle ou imaginaire d'un symbole du signal à décoder un intervalle $I_i = [b\text{inf}_i, B\text{sup}_i]$. Pour ajouter la contrainte liée à la constellation, on fait l'intersection entre l'intervalle [*C* min, *C* max] correspondant à la constellation (moyennant un changement de variable pour se placer dans Z) et les intervalles $I_i$. L'intervalle final auquel les noeuds du $i^{\text{ème}}$ niveau peuvent appartenir est : $I_{i\text{final}} = [\max(C \text{ min}, B \text{ inf}_i), \min(C \text{ max}, B \text{ sup}_i)]$.

Cette valeur de seuil C peut être fixée arbitrairement.

Par exemple, le rayon peut être calculé en fonction du rapport signal à bruit SNR en utilisant la formule suivante, proposée par Hassibi et al. dans « *On the expected complexity of sphere decoding* » :

$$C = \sqrt{2n\sigma^2},$$

où n est la dimension du réseau.

Un choix plus judicieux du rayon, peut être fait en tenant compte des évanouissements du canal, et par la suite de la matrice G', comme cela est proposé pour les décodeurs par sphère. Ainsi, le rayon peut être calculé en utilisant la formule suivante, proposée par G. Rekaya dans « *Nouvelles constructions algébriques de code spatio-temporels atteignant le compromis multiplexage-diversité* » :

$$C = \sqrt{\min(2n\sigma^2, \min(diag(G'^{T} G')))}$$

La valeur du seuil C peut également être définie dynamiquement, en fonction d'une ou plusieurs caractéristiques du canal de transmission.

De cette façon, on ne mémorise dans la première pile lors de l'étape 63 que les noeuds fils d'un noeud courant présentant un coût inférieur ou égal au seuil C, déterminé dynamiquement ou fixé arbitrairement. On considère par exemple que pour un noeud courant, les $k$ noeuds fils ayant les métriques les plus basses sont conservés et les autres sont rejetés.

Par exemple, si le nombre maximal de fils pour un noeud est égal à 2, on peut choisir C de façon à avoir $k$ égal à 1. On diminue ainsi de manière conséquente le nombre de chemins possibles dans l'arbre.

La valeur de $k$ peut notamment dépendre de la profondeur à l'intérieur de l'arbre. Ainsi, plus de noeuds fils peuvent être générés pour de petites dimensions et moins de noeuds fils pour des dimensions plus élevées. Par exemple, si l'on cherche à décoder quatre symboles complexes de modulation 4-QAM, un arbre de profondeur égale à 8, dans lequel chaque noeud a deux fils, peut être utilisé. Pour les quatre premières dimensions, on peut déterminer à chaque fois les deux noeuds fils possibles, puis pour les quatre dernières dimensions, on peut ne générer qu'un seul des deux noeuds fils.

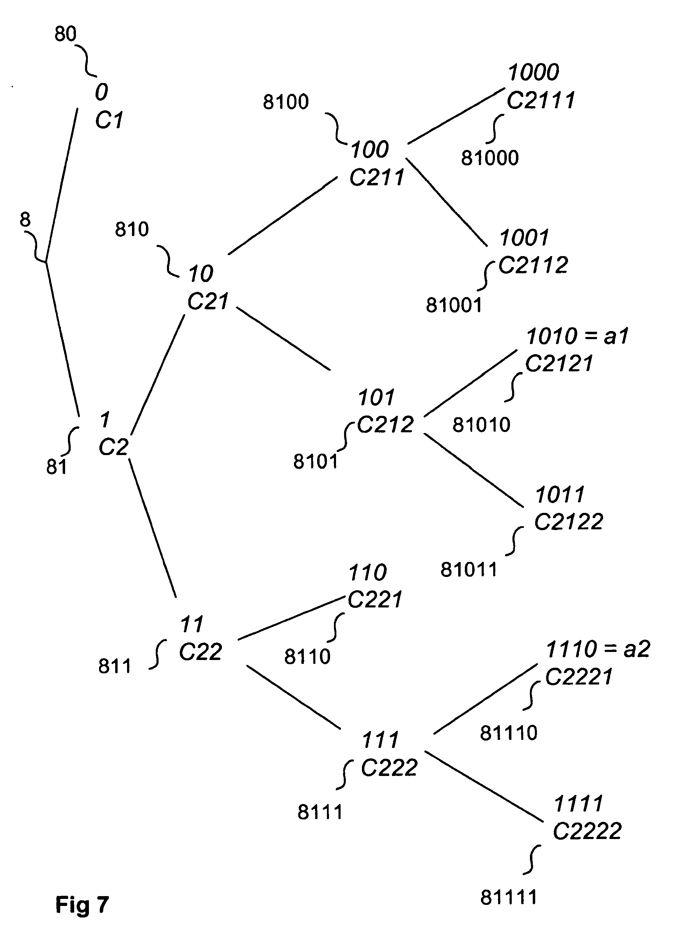

On présente désormais, en relation avec la figure 7, l'arbre de décodage construit après deux itérations 52 et 53 du décodage à pile correspondant au mode de réalisation illustré en figure 6.

On considère que le seuil C est très grand, de façon à couvrir le plus de chemins possibles.

Tout d'abord, à partir du noeud racine 8, deux noeuds fils 80 et 81 sont générés durant les étapes de génération d'au moins un noeud fils 61 et de calcul des coûts associés 62. Le chemin et la métrique correspondants sont respectivement :

- 0 et C1 pour le noeud fils 80 ;et
- 1 et C2 pour le noeud fils 81.

La première pile contient alors les données associées aux noeuds 80 et 81.

Ensuite, en supposant que la métrique C2 est inférieure à la métrique C1 (C2 < C1), le nouveau noeud courant sélectionné au cours de l'étape 64 est le noeud 81.

A partir du nouveau noeud courant 81, deux noeuds fils 810 et 811 sont générés durant les étapes de génération d'au moins un noeud fils 61 et de calcul des coûts associés 62. Le chemin et la métrique correspondants sont respectivement :

- 10 et C21 pour le noeud 810 ; et
- 11 et C22 pour le noeud 811.

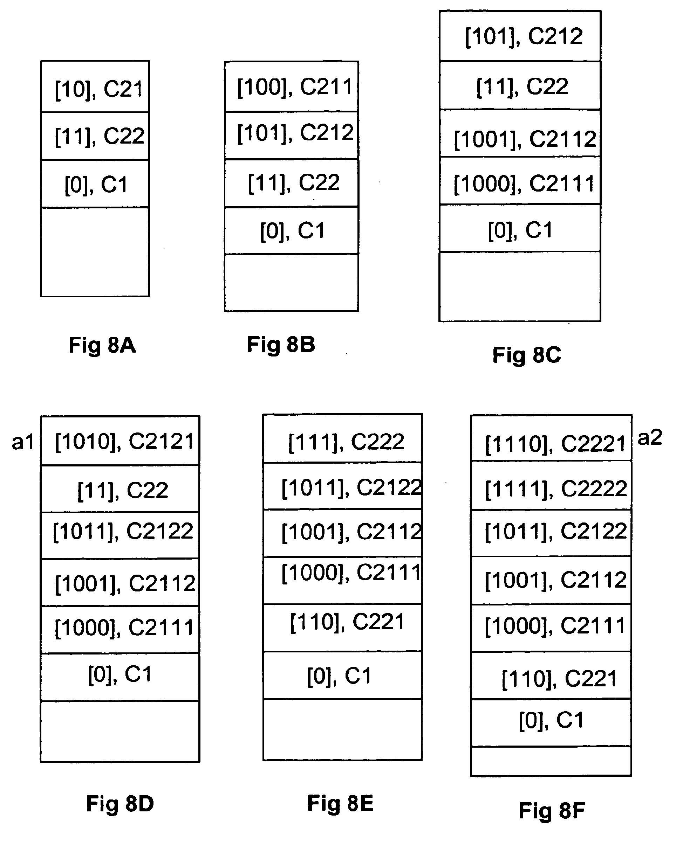

En supposant que la métrique C21 est inférieure à la métrique C22, le nouveau noeud courant sélectionné au cours de l'étape 64 est le noeud 810. De plus, si la première pile est ordonnée en positionnant au sommet de la pile le noeud présentant le coût le plus faible, et en supposant que la métrique C22 est inférieure à la métrique C1 (C21 < C22 < C1), alors la première pile contient le noeud 810 (sommet de la pile), puis le noeud 811 et finalement le noeud 80 (base de la pile). Le contenu de la première pile à cet instant est illustré en figure 8A.

A partir du nouveau noeud courant 810, deux noeuds fils 8100 et 8101 sont générés. Le chemin et la métrique correspondants sont respectivement :

- 100 et C211 pour le noeud 8100 ; et
- 101 et C212 pour le noeud 8101.

En supposant que la métrique C211 est inférieure à la métrique C212, le nouveau noeud courant sélectionné au cours de l'étape 64 est le noeud 8100. Si la métrique C212 est inférieure à la métrique C22 (C211 < C212 < C22 < C1), alors la première pile contient le noeud 8100 (sommet de la pile), puis le noeud 8101, puis le noeud 811 et finalement le noeud 80 (base de la pile). Le contenu de la première pile à cet instant est illustré en figure 8B.

A partir du nouveau noeud courant 8100, deux noeuds fils 81000 et 81001 sont générés. Le chemin et la métrique correspondants sont respectivement :

- 1000 et C2111 pour le noeud 81000 ; et
- 1001 et C2112 pour le noeud 81001.

En supposant que la métrique C212 est inférieure aux métriques C2111 et C2112, le nouveau noeud courant sélectionné au cours de l'étape 64 est le noeud 8101.

Si la métrique C22 est inférieure à la métrique C2112, qui est inférieure à la métrique C2111, elle-même inférieure à C1 (C212 < C22 < C2112 < C2111 < C1), alors la première pile contient le noeud 8101 (sommet de la pile), puis le noeud 811, puis le noeud 81001, puis le noeud 81000, et finalement le noeud 80 (base de la pile). Le contenu de la première pile à cet instant est illustré en figure 8C.

A partir du nouveau noeud courant 8101, deux noeuds fils 81010 et 81011 sont générés. Le chemin et la métrique correspondants sont respectivement :

- 1010 et C2121 pour le noeud 81001 ; et
- 1011 et C2122 pour le noeud 81011.

En supposant C2121 < C22 < C2122 < C2112 < C2111 < C1, le nouveau noeud courant sélectionné au cours de l'étape 64 est le noeud 81010.

La première pile contient alors le noeud 81010 (sommet de la pile), puis le noeud 811, puis le noeud 81011, puis le noeud 81001, puis le noeud 81000 et finalement le noeud 80 (base de la pile). Le contenu de la première pile à cet instant est illustré en figure 8D.

Si le nouveau noeud sélectionné 81010 est identifié comme étant un noeud feuille au cours de l'étape de test 65, alors le chemin entre la racine de l'arbre et le noeud 81010 est mémorisé dans une deuxième pile. Il s'agit d'un premier signal candidat, notée a1 Ainsi, la deuxième pile contient le chemin C2121, correspondant aux bits [1010].

La première itération de décodage à pile 52 est terminée.

Si le nombre maximal d'itérations *M* est égal à 1, une seule itération est effectuée, et une estimation binaire de la séquence émise est calculée.

Si le nombre maximal d'itérations *M* est supérieur à 1, on passe à une deuxième itération.

La deuxième itération de décodage à pile 53 est mise en oeuvre. Cette deuxième itération est appliquée à l'arbre en excluant la première solution candidate a1, c'est-à-dire en supprimant le noeud feuille 81010 de façon à déterminer un nouveau chemin entre la racine de l'arbre et une feuille.

Pour ce faire, après suppression du noeud courant 81010 dans la première pile, on sélectionne un nouveau noeud courant, présentant le coût associé le plus faible. Il s'agit du noeud 811.

A partir du nouveau noeud courant 811, deux noeuds fils 8110 et 8111 sont générés. Le chemin et la métrique correspondants sont respectivement :

- 110 et C221 pour le noeud 8110 ; et
- 111 et C222 pour le noeud 8111.

En supposant que la métrique C222 est inférieure à la métrique C221 (C222 < C2122 < C2112 < C2111 < C221 < C1), le nouveau noeud courant sélectionné au cours de l'étape 64 est le noeud 8111. La première pile contient alors le noeud 8111 (sommet de la pile), puis le noeud 81011, puis le noeud 81001, puis le noeud 81000, puis le noeud 8110, et finalement le noeud 80 (base de la pile). Le contenu de la première pile à cet instant est illustré en figure 8E.

A partir du nouveau noeud courant 8111, deux noeuds fils 81110 et 81111 sont générés. Le chemin et la métrique correspondants sont respectivement :

- 1110 et C2221 pour le noeud 81110 ; et
- 1111 et C2222 pour le noeud 81111.

En supposant que la métrique C2221 est inférieure à la métrique C2222 (C2221 < C2222 < C2122 < C2112 < C2111 < C221 < C1), le nouveau noeud courant sélectionné au cours de l'étape 64 est le noeud 81110.

La première pile contient alors le noeud 81110 (sommet de la pile), puis le noeud 81111, puis le noeud 81011, puis le noeud 81001, puis le noeud 81000, puis le noeud 8110, et finalement le noeud 80 (base de la pile). Le contenu de la première pile à cet instant est illustré en figure 8F.

Si le nouveau noeud sélectionné 81110 est identifié comme étant un noeud feuille au cours de l'étape de test 65, alors le chemin entre la racine de l'arbre et le noeud 81110 est mémorisé dans la deuxième pile. Il s'agit d'un deuxième signal candidat, notée a2 Ainsi, la deuxième pile contient, en plus du chemin C2121, correspondant aux bits [1010], déterminé au cours de la première itération, le chemin C2221, correspondant aux bits [1110].

La deuxième itération de décodage à pile 53 est terminée.

Il est possible de prévoir de nouvelles itérations, en supprimant le noeud courant 81110 de la première pile.

Comme déjà discuté, les figures 8A à 8F illustrent le contenu de la première pile à différents stades de l'étape de décodage. De manière avantageuse, durant l'étape de mémorisation, les données des noeuds sont enregistrées dans la première pile selon un ordre décroissant des métriques associées aux noeuds. Ainsi, les données d'un noeud correspondant au coût le plus faible sont au sommet de la pile, et les données d'un noeud correspondant au coût le plus élevé sont à la base de la pile. Le tri des données durant l'étape de mémorisation peut être mis en oeuvre en comparant les données des noeuds nouvellement mémorisés par rapport aux coûts des noeuds déjà stockés. Il n'est pas nécessaire de comparer entre eux les coûts des noeuds déjà mémorisés dans la première pile. Cette méthode correspond au tri par insertion. De cette façon, lors de l'étape de sélection d'un nouveau noeud courant, il suffit de sélectionner le noeud situé au sommet de la pile.

La deuxième pile, qui comprend une liste de chemins candidats, est quant à elle ordonnée par construction. Lors de l'étape de détermination d'une estimation probabiliste du signal de données, on peut choisir d'accorder une plus grande confiance aux chemins situés au sommet de la deuxième pile. Ainsi, on peut n'utiliser que les chemins les plus fiables de la deuxième pile pour calculer les probabilités de vraisemblance.

*5.3 Application aux systèmes multi-utilisateurs*

On décrit ci-après un exemple de mise en oeuvre de l'invention dans le cadre d'une détection de multi-utilisateurs.

On considère dans ce contexte un système de transmission comprenant un récepteur et une pluralité d'émetteurs, comprenant chacun une seule antenne, chaque émetteur pouvant être identifié par un schéma d'accès multiple (par exemple de type CDMA (en anglais « Code Division Multiple Access », en français « accès multiple par répartition en code »), « flash OFDM », ...). Plusieurs utilisateurs partagent donc la même ressource de transmission pour transmettre des données au récepteur.

Dans l'application à la détection de multi-utilisateurs, comme dans l'application multi-antennes décrite précédemment, le problème du décodage comprend une estimation d'un vecteur d'entrée discret transmis, basée sur une observation du signal reçu, correspondant au vecteur transmis perturbé par le canal.

Pour une détection multi-utilisateurs selon cet exemple d'application, le vecteur d'entrée est constitué des composantes réelle et imaginaire de l'ensemble des symboles transmis par Q utilisateurs dans une région temps et/ou fréquence donnée, dépendant du schéma d'accès multiple. Par exemple, dans le cadre d'un accès multiple de type CDMA, la région correspond à la durée en temps des séquences d'étalement. La valeur Q correspond ici au nombre d'émetteurs utilisés, de la même façon que Q indique le nombre de symboles par mot de code spatio-temporel dans l'exemple d'application aux systèmes multi-antennes discuté précédemment.

L'observation du signal est composée par l'ensemble des réponses associées aux signaux transmis par chaque émetteur. La distorsion linéaire des signaux transmis peut être représentée par une matrice composée par l'ensemble des matrices de canal équivalent entre les Q émetteurs et le récepteur, en tenant compte du schéma d'accès multiple. Par exemple, en CDMA, cette distorsion linéaire correspond à une combinaison entre les différentes matrices de canal et la matrice de corrélation du sous-ensemble de codes d'étalement. Le bruit additif est le bruit blanc additif gaussien thermique au niveau du récepteur et son amplitude suit une loi en $\chi^2$.

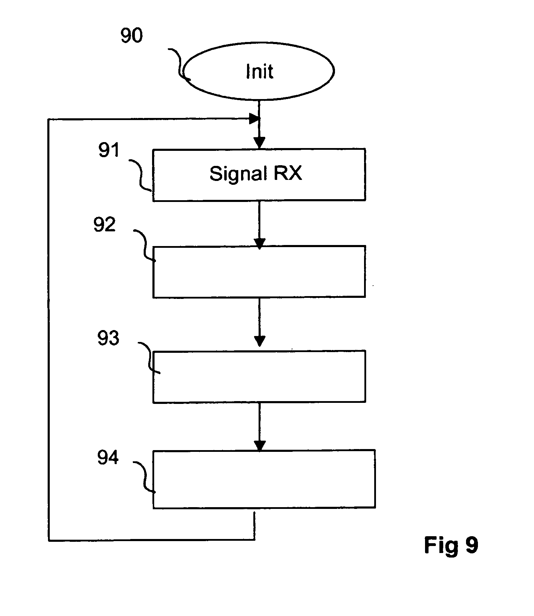

La figure 9 représente une détection multi-utilisateurs selon un mode de réalisation spécifique de l'invention. Cette détection est mise en oeuvre dans un récepteur qui reçoit des données de Q émetteurs utilisant par exemple un accès multiple par répartition en code (CDMA).

Le décodage commence par une étape d'initialisation 90 au cours de laquelle différents paramètres du procédé sont mis à leur(s) valeur(s) initiale(s).

Ensuite durant une étape 91, le récepteur attend de recevoir un signal issu des filtres adaptés aux séquences CDMA utilisées.

Une estimation des différents canaux de transmission entre les Q émetteurs et le récepteur est ensuite mise en oeuvre au cours d'une étape 92. Par exemple, cette estimation est basée sur les séquences pilotes utilisées spécifiquement par chaque émetteur.

Le récepteur peut ainsi en déduire la valeur de σ en utilisant, par exemple, des séquences pilotes. Cette étape peut être exécutée après chaque estimation de canal, ou bien à chaque réception d'un signal correspondant à un seul bloc transmis.

Ensuite, le récepteur exécute une étape de prétraitement 93, au cours de laquelle la matrice composée par l'ensemble des matrices de canal équivalent entre les Q émetteurs et le récepteur, en tenant compte du schéma d'accès multiple, est remplacée par la matrice de canal équivalent G'.

Finalement, le récepteur effectue un décodage à pile au cours d'une étape 94, mettant en oeuvre au moins une itération de décodage à pile.

Par exemple, le récepteur met en oeuvre les étapes 52 à 56 précédemment décrites en relation avec la figure 5, de façon à obtenir une estimation probabiliste, le signal candidat de la figure 5 étant remplacé par un ensemble de signaux transmis par les Q émetteurs.

On retourne ensuite à l'étape 91.

On peut noter que selon cette application à la détection multi-utilisateurs, certains émetteurs et/ou le récepteur peuvent utiliser plusieurs antennes. Le signal émis entre les différents émetteurs et le récepteur peut également être mono porteuse ou multiporteuse.

*5.4 Variantes de réalisation*

Bien entendu, l'invention n'est pas limitée aux exemples de réalisation décrits ci-dessus.

En particulier, l'invention peut être utilisé quelque soit le type de transmission (point à point, multipoint à point, réseaux locaux sans fils, réseaux mobiles, diffusion numérique, communication par satellite, ...). Le récepteur illustré en figure 3 comprend alors des éléments adaptés à une telle application (comme une interface de couche MAC, un démodulateur, ou tout autre élément classique utilisé dans les communications numériques).

L'invention est également bien adaptée à la réception de signaux de télévision, émis par exemple selon la norme DVB (« Digital Video Broadcasting »), DVB-T (terrestre), DVB-S (satellite), ou DVB-H (mobile), etc.

Par ailleurs, l'invention peut être utilisée pour le décodage de signaux transmis sur une liaison sans fil à haute efficacité spectrale (comme un système MIMO et/ou modulation nQAM), et, en particulier, dans une transmission à haut débit.

Finalement, l'invention n'est pas limitée aux applications multi-antennes ou multi-utilisateurs, et peut par exemple être utilisée dans une application combinant les technique de décodage MIMO et de détection multi-utilisateurs.

**Revendications**

**1.** Procédé de décodage d'un signal reçu, correspondant à un signal de données émis véhiculé par l'intermédiaire d'un canal de transmission,

ledit procédé mettant en oeuvre une construction progressive d'un arbre de décodage, dans lequel un noeud correspond à une composante d'un symbole dudit signal de données, et est associé à un coût,

**caractérisé en ce que** ladite construction met en oeuvre au moins deux itérations (52, 53) des étapes suivantes, pour un noeud courant dudit arbre mémorisé dans une première pile, chaque itération permettant de mémoriser dans une deuxième pile un chemin entre le noeud racine dudit arbre et un noeud feuille:

- sélection (61), en tenant compte du coût associé, d'au moins un noeud fils dudit noeud courant appartenant à un intervalle de sélection prédéterminé, si au moins un tel noeud existe ;
- mémorisation dans ladite première pile des noeuds fils sélectionnés et des coûts associés ;
- suppression (63), dans ladite première pile, dudit noeud courant ;
- sélection (64) dans ladite première pile, d'un nouveau noeud courant, en tenant compte du coût associé ; et
- si ledit nouveau noeud courant est un noeud feuille, qui ne possède aucun noeud fils, mémorisation (66) du chemin entre le premier noeud dudit arbre, dit noeud racine, et ledit noeud feuille, dans ladite deuxième pile, et suppression dudit noeud feuille dans ladite première pile ;
- sinon, retour à l'étape de sélection (61) d'au moins un noeud fils pour ledit nouveau noeud courant ;

**en ce que** ledit procédé calcule une probabilité de vraisemblance des bits $b_i$ correspondant à une représentation binaire des symboles formant lesdits chemins mémorisés dans ladite deuxième pile, telle que :

$$LLR(b_i) = \log \frac{P(b_i = 1 | y, H)}{P(b_i = 0 | y, H)},$$

avec :

- $LLR(b_i)$ la probabilité de vraisemblance d'un bit à la position i dans les représentations binaires des symboles formant lesdits chemins mémorisés dans ladite deuxième pile, exprimée sous la forme de logarithme du rapport de vraisemblence;
- $y$ ledit signal reçu,
- H une matrice représentative dudit canal de transmission,

et **en ce que** ledit procédé comprend une étape de détermination d'une estimation probabiliste dudit signal de données, en tenant compte du ou desdits chemins mémorisés dans ladite deuxième pile et desdites probabilités de vraisemblance.

2. Procédé de décodage selon la revendication 1, **caractérisé en ce que** ledit intervalle de sélection est déterminé pour chaque composante d'un symbole dudit signal de données à partir d'un premier intervalle déterminé à partir d'une sphère de rayon C centrée sur ledit signal reçu, et d'un deuxième intervalle déterminé à partir d'une constellation desdits symboles.

3. Procédé de décodage selon la revendication 2, **caractérisé en ce que** le rayon de ladite sphère est choisi en fonction d'au moins une caractéristique dudit canal de transmission.

4. Procédé de décodage selon l'une quelconque des revendications 1 à 3, **caractérisé en ce que** lesdites itérations comprennent une étape d'ordonnancement de ladite première pile, préalablement à ladite étape de sélection d'un nouveau noeud courant, ordonnant lesdits noeuds en fonction du coût associé, le noeud présentant le coût le plus faible étant situé en premier dans ladite première pile,
le coût associé à un noeud étant défini par la distance euclidienne entre ledit signal reçu et le chemin entre ledit noeud racine et ledit noeud,
et **en ce que** lors de ladite étape de sélection d'un nouveau noeud courant, on sélectionne le premier noeud dans ladite première pile.

5. Procédé de décodage selon l'une quelconque des revendications 1 à 4, **caractérisé en ce que** lesdites itérations sont mises en oeuvre tant que ladite deuxième pile n'est pas remplie.

6. Procédé de décodage selon l'une quelconque des revendications 1 à 4, **caractérisé en ce que** lesdites itérations sont mises en oeuvre tant que le coût associé audit noeud courant est inférieur ou égal à un seuil prédéterminé.

7. Procédé de décodage selon l'une quelconque des revendications 1 à 6, **caractérisé en ce que** ledit signal reçu est un signal à porteuses multiples.

8. Procédé de décodage selon l'une quelconque des revendications 1 à 7, **caractérisé en ce que** ledit signal de données est émis sur au moins une antenne d'émission et reçu sur au moins une antenne de réception.

9. Procédé de décodage selon l'une quelconque des revendications 1 à 8, **caractérisé en ce que** ladite itération comprend une étape de détermination des coûts des noeuds fils appartenant audit intervalle de sélection, et de soustraction d'un biais aux coûts associés auxdits noeuds fils, préalablement à ladite étape de mémorisation.

10. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de décodage selon l'une au moins des revendications 1 à 9.

11. Dispositif de décodage d'un signal reçu, correspondant à un signal de données émis véhiculé par l'intermédiaire d'un canal de transmission,
comprenant des moyens pour la construction progressive d'un arbre de décodage, dans lequel un noeud correspond à une composante d'un symbole dudit signal de données, et est associé à un coût,
et une première pile dans laquelle est mémorisée un noeud courant dudit arbre,
**caractérisé en ce que** lesdits moyens de construction comprennent les moyens suivants, activés pour au moins deux itérations permettant chacune de mémoriser dans une deuxième pile un chemin entre le noeud racine dudit arbre et un noeud feuille:

- des moyens de sélection (61), en tenant compte du coût associé, d'au moins un noeud fils dudit noeud courant appartenant à un intervalle de sélection prédéterminé, si au moins un tel noeud existe ;

- des moyens de mémorisation dans ladite première pile des noeuds fils sélectionnés et des coûts associés ;
- des moyens de suppression (63), dans ladite première pile, dudit noeud courant ;
- des moyens de sélection (64) dans ladite première pile, d'un nouveau noeud courant, en tenant compte du coût associé ; et
- des moyens de mémorisation (66) du chemin entre le premier noeud dudit arbre, dit noeud racine, et ledit noeud feuille, dans ladite deuxième pile ;
- des moyens de suppression dudit noeud feuille dans ladite première pile ;

et **en ce que** ledit dispositif comprend également :

- des moyens de calcul d'une probabilité de vraisemblance des bits correspondant à une représentation binaire des symboles formant lesdits chemins mémorisés dans ladite deuxième pile, telle que :

$$LLR(b_i) = \log \frac{P(b_i = 1 | y, H)}{P(b_i = 0 | y, H)},$$

avec :

- $LLR(b_i)$ la probabilité de vraisemblance d'un bit à la position i dans les représentations binaires des symboles formant lesdits chemins mémorisés dans ladite deuxième pile, exprimée sous la forme de logarithme du rapport de vraisemblence,
- y ledit signal reçu,
- H une matrice représentative dudit canal de transmission, et

- des moyens de détermination d'une estimation probabiliste dudit signal de données, à partir du ou desdits chemins mémorisés dans ladite deuxième pile et desdites probabilités de vraisemblance.

12. Dispositif de décodage selon la revendication 11, **caractérisé en ce qu'**il peut être mise en oeuvre en utilisant un ou plusieurs circuits intégrés de type réseau prédiffusé programmable par l'utilisateur, circuits intégrés à application spécifique, intégration à très grande échelle.

**Claims**

1. Process for decoding a received signal corresponding to a transmitted data signal conveyed by means of a transmission channel,
said process implementing a progressive construction of a decoding tree in which a node corresponds to a component of a symbol of said data signal and is associated with a cost,
**characterised in that** said construction implements at least two iterations (52, 53) of the following steps, for a current node of said tree stored in a first stack, each iteration making it possible to store, in a second stack, a path between the root node of said tree and a leaf node:

- selection (61), taking into account the associated cost, of at least one child node of said current node belonging to a predetermined selection interval if at least one such node exists;
- storage, in said first stack, of the selected child nodes and of the associated costs;
- deletion (63), from said first stack, of said current node;
- selection (64), from said first stack, of a new current node, taking into account the associated cost; and
- if said new current node is a leaf node that does not have any child node, storage (66) of the path between the first node of said tree, called the root node, and said leaf node, in said second stack, and deletion of said leaf node from said first stack;
- otherwise, return to the step of selection (61) of at least one child node for said new current node;

and **in that** said process calculates a probability of likelihood of the bits $b_i$ corresponding to a binary representation of the symbols forming said paths stored in said second stack, such that:

$$LLR(b_i) = \log \frac{P(b_i = 1 \mid y, H)}{P(b_i = 0 \mid y, H)}$$

wherein:

- *LLR(b$_i$)* is the probability of likelihood of a bit at position *i* in the binary representations of the symbols forming said paths stored in said second stack, expressed in the form of the logarithm of the likelihood ratio,
- *y* is said received signal,
- *H* is a matrix representing said transmission channel,

and **in that** said process includes a step of determination of a probabilistic estimation of said data signal, taking into account said path(s) stored in the second stack and said probabilities of likelihood.

2. Decoding process according to Claim 1, **characterised in that** said selection interval is determined for each component of a symbol of said data signal from a first interval determined from a sphere of radius *C* centred on said data signal, and from a second interval determined from a constellation of said symbols.

3. Decoding process according to Claim 2, **characterised in that** the radius of said sphere is chosen as a function of at least one characteristic of said transmission channel.

4. Decoding process according to any one of Claims 1 to 3, **characterised in that** said iterations include a step of sequencing said first stack, prior to said step of selection of a new current node, sequencing said nodes as a function of the associated cost, the node exhibiting the lowest cost being situated first in said first stack,
the cost associated with a node being defined by the Euclidean distance between said received signal and the path between said root node and said node,
and **in that** during said step of selection of a new current node the first node in said first stack is selected.

5. Decoding process according to any one of Claims 1 to 4, **characterised in that** said iterations are implemented as long as said second stack is not filled.

6. Decoding process according to any one of Claims 1 to 4, **characterised in that** said iterations are implemented as long as the cost associated with said current node is less than or equal to a predetermined threshold.

7. Decoding process according to any one of Claims 1 to 6, **characterised in that** said received signal is a multicarrier signal.

8. Decoding process according to any one of Claims 1 to 7, **characterised in that** said data signal is transmitted by at least one transmitting antenna and received by at least one receiving antenna.

9. Decoding process according to any one of Claims 1 to 8, **characterised in that** said iteration includes a step of determination of the costs of the child nodes belonging to said selection interval, and of subtraction of a bias from the cost associated with said child nodes prior to said storage step.

10. Computer-program product downloadable from a communications network and/or recorded on a computer-readable medium and/or capable of being executed by a processor, **characterised in that** said computer-program product comprises program-code instructions for implementation of the decoding process according to at least one of Claims 1 to 9.

11. Device for decoding a received signal corresponding to a transmitted data signal conveyed by means of a transmission channel,
including means for progressive construction of a decoding tree in which a node corresponds to a component of a symbol of said data signal and is associated with a cost,
and a first stack in which a current node of said tree is stored,
**characterised in that** said construction means comprise the following means, activated for at least two iterations, each making it possible to store, in a second stack, a path between the root node of said tree and a leaf node:

- means for selection (61), taking into account the associated cost, of at least one child node of said current node belonging to a predetermined selection interval if at least one such node exists;
- means for storage, in said first stack, of the selected child nodes and of the associated costs;
- means for deletion (63), from said first stack, of said current node;
- means for selection (64), from said first stack, of a new current node, taking into account the associated cost; and
- means for storage (66) of the path between the first node of said tree, called the root node, and said leaf node, in the second stack;
- means for deletion of said leaf node from said first stack;

**characterised in that** said device also includes:

- means for calculation of a probability of likelihood of the bits corresponding to a binary representation of the symbols forming said paths stored in said second stack, such that:

$$LLR(b_i) = \log \frac{P(b_i = 1 \mid y, H)}{P(b_i = 0 \mid y, H)}$$

wherein:

- *LLR(b_i)* is the probability of likelihood of a bit at position *i* in the binary representations of the symbols forming said paths stored in said second stack, expressed in the form of the logarithm of the likelihood ratio,
- *y* is said received signal,
- *H* is a matrix representing said transmission channel, and

- means for determination of a probabilistic estimation of said data signal from said path(s) stored in said second stack and from the probabilities of likelihood.

12. Decoding device according to Claim 11, **characterised in that** it can be implemented by utilising one or more integrated circuits of type FPGA (Field programmable gate array), ASIC (Application Specific Integrated Circuit), VLSI (Very Large Scale Integration).

**Patentansprüche**

1. Verfahren zur Dekodierung eines empfangenen Signals, das einem mittels eines Übertragungskanals übertragenen, gesendeten Datensignal entspricht.
wobei das Verfahren einen progressiven Aufbau eines Dekodierbaums aufweist, bei dem ein Knoten einer Komponente eines Symbols des Datensignals entspricht und einem Kostenpunkt zugeordnet ist.
**dadurch gekennzeichnet, dass** der Aufbau mindestens zwei Iterationen (52, 53) der darauf folgenden Schritte für einen aktuellen Knoten des gespeicherten Baums aufweist, der in einem ersten Stapel gespeichert ist, wobei jede Iteration es erlaubt, in einem zweiten Stapel einen Pfad zwischen dem Wurzelknoten des Baums und einem Blattknoten zu speichern:

- Auswahl (61) unter Berücksichtigung des dazugehörenden Kostenpunktes mindestens eines aktuellen Kindknotens, der zu einem vorausbestimmten Auswahlintervall gehört, wenn wenigstens ein derartiger Knoten existiert;
- Speichern in dem ersten Stapel der ausgewählten Kindknoten und der zugeordneten Kostenpunkte;
- Löschen (63) aus dem ersten Stapel des aktuellen Knotens;
- Auswahl (64) aus dem ersten Stapel eines neuen aktuellen Knotens unter Berücksichtigung des dazugehörenden Kostenpunktes und
- wenn der neue aktuelle Knoten ein Blattknoten ist, der keinen Kindknoten besitzt, Speichern (66) des Pfads zwischen dem ersten Knoten des Baums, Wurzelknoten genannt, und dem Blattknoten in dem zweiten Stapel und Löschen des Blattknotens aus dem ersten Stapel;
- anderenfalls Rückkehr zu dem Schritt der Auswahl (61) mindestens eines Kindknotens für den neuen aktuellen Knoten;

dass das Verfahren eine Wahrscheinlichkeit der Bits $b_i$ berechnet, die einer binären Darstellung der Symbole entsprechen, welche die in dem zweiten Stapel gespeicherten Pfade bilden, wie zum Beispiel:

$$LLR(b_i) = \log \frac{P(b_i = 1/y, H)}{P(b_i = 0/y, H)}$$

mit:

- $LLR(b_i)$ als Wahrscheinlichkeit eines Bits an der Position $i$ in den binären Darstellungen der Symbole, welche die in den zweiten Stapel gespeicherten Pfade bilden, ausgedrückt in Form des Logarithmus des Wahrscheinlichkeitsverhältnisses,
- $y$ als das empfangene Signal,
- H als für den Übertragungskanal repräsentative Matrix,

und dass das Verfahren einen Schritt des Bestimmens einer probabilistischen Schätzung des Datensignals unter Berücksichtigung des oder der Pfade, die in dem zweiten Stapel gespeichert sind, und der Wahrscheinlichkeit aufweist.

2. Verfahren zur Dekodierung nach Anspruch 1, **dadurch gekennzeichnet, dass** das Auswahlintervall für jede Komponente eines Symbols des Datensignals ausgehend von einem ersten Intervall, das ausgehend von einer Kugel mit dem Radius C zentriert auf dem empfangenen Signal bestimmt wird, und einem zweiten Intervall bestimmt wird, das ausgehend von einer Konstellation der Symbole bestimmt wird.

3. Verfahren zur Dekodierung nach Anspruch 2, **dadurch gekennzeichnet, dass** der Radius der Kugel in Abhängigkeit von mindestens einer Kenngröße des Übertragungskanals ausgewählt wird.

4. Verfahren zur Dekodierung nach einem der Ansprüche 1 bis 3, **dadurch gekennzeichnet, dass** die Iterationen einen Schritt der Anordnung des ersten Stapels vor dem Auswahlschritt eines neuen aktuellen Knotens aufweisen, der die Knoten in Abhängigkeit von dem dazugehörenden Kostenpunkt anordnet, wobei sich der Knoten, der den niedrigsten Kostenpunkt aufweist, zuerst in dem Stapel befindet,
wobei der zu einem Knoten gehörende Aufwand durch die euklidische Distanz zwischen dem empfangenen Signal und dem Pfad zwischen dem Wurzelknoten und dem Knoten definiert ist,
und dass man bei dem Auswahlschritt eines neuen aktuellen Knotens den ersten Knoten in dem ersten Stapel auswählt.

5. Verfahren zur Dekodierung nach einem der Ansprüche 1 bis 4, **dadurch gekennzeichnet, dass** die Iterationen solange umgesetzt werden, wie der zweite Stapel nicht gefüllt ist.

6. Verfahren zur Dekodierung nach einem der Ansprüche 1 bis 4, **dadurch gekennzeichnet, dass** die Iterationen solange umgesetzt werden, wie der zu dem aktuellen Knoten gehörende Kostenpunkt kleiner oder gleich einem vorbestimmten Schwellenwert ist.

7. Verfahren zur Dekodierung nach einem der Ansprüche 1 bis 6, **dadurch gekennzeichnet, dass** das empfangene Signal ein Signal mit vielfachen Trägerwellen ist.

8. Verfahren zur Dekodierung nach einem der Ansprüche 1 bis 7, **dadurch gekennzeichnet, dass** das Datensignal auf mindestens einer Sendeantenne gesendet wird und auf mindestens einer Empfangsantenne empfangen wird.

9. Verfahren zur Dekodierung nach einem der Ansprüche 1 bis 8, **dadurch gekennzeichnet, dass** die Iteration einen Schritt des Bestimmens der Kostenpunkte der Kindknoten, die zu dem Auswahlintervall gehören, und der Subtraktion eines systematischen Fehlers von den zu den Kindknoten gehörenden Kostenpunkten vor dem Schritt des Speicherns umfasst.

10. Computerprogrammprodukt, das von einem Kommunikationsnetzwerk heruntergeladen werden kann und/oder auf einem computerlesbaren Träger aufgezeichnet ist und/oder durch einen Prozessor ausgeführt werden kann, **da-**

**durch gekennzeichnet, dass** es Programmcodeanweisungen für die Umsetzung des Verfahrens zur Dekodierung nach mindestens einem der Ansprüche 1 bis 9 aufweist.

11. Vorrichtung zur Dekodierung eines empfangenen Signals, das einem mittels eines Übertragungskanals übertragenen Datensignal entspricht,
welche Mittel zum progressiven Aufbau eines Dekodierbaums aufweist, in welchem ein Knoten einer Komponente eines Symbols des Datensignals entspricht und einem Kostenpunkt zugeordnet ist,
und einen ersten Stapel, in dem ein aktueller Knoten des Baums gespeichert wird,
**dadurch gekennzeichnet, dass** die Aufbaumittel die folgenden Mittel aufweisen, die für mindestens zwei Iterationen aktiviert werden, die jeweils das Speichern eines Pfads zwischen dem Wurzelknoten des Baums und einem Blattknoten in einem zweiten Stapel erlauben:

- Mittel zur Auswahl (61) unter Berücksichtigung des dazugehörenden Kostenpunktes mindestens eines Kindknotens des aktuellen Knotens, der zu einem vorbestimmten Auswahlintervall gehört, wenn wenigstens ein derartiger Knoten existiert;
- Mittel zum Speichern in dem ersten Stapel der ausgewählten Kindknoten und der dazugehörenden Kostenpunkte;
- Mittel zum Löschen (63) des aktuellen Knotens aus dem ersten Stapel;
- Mittel zur Auswahl (64) aus dem ersten Stapel eines ersten aktuellen Knotens unter Berücksichtigung des zugeordneten Kostenpunktes und
- Mittel zum Speichern (66) des Pfads zwischen dem ersten Knoten des Baums, Wurzelknoten genannt, und dem Blattknoten in dem zweiten Stapel;
- Mittel zum Löschen des Blattknotens aus dem ersten Stapel;

und dass die Vorrichtung ferner Folgendes aufweist:

- Mittel zur Berechnung einer Wahrscheinlichkeit der Bits, die einer binären Darstellung der Symbole, die die in dem zweiten Stapel gespeicherten Pfade bilden, entsprechen, so dass

$$LLR(b_i) = \log \frac{P(b_i = 1 / y, H)}{P(b_i = 0 / y, H)}$$

mit:

- *LLR(b_i)* als die Wahrscheinlichkeit eines Bits an der Position *i* in den binären Darstellungen der Symbole, welche die in dem zweiten Stapel gespeicherten Pfade bilden, ausgedrückt in Form des Logarithmus des Wahrscheinlichkeitsverhältnisses,
- *y* als das empfangene Signal,
- H als eine Matrix, die den Übertragungskanal darstellt und

- Mittel zum Bestimmen einer probabilistischen Schätzung des Datensignals ausgehend von dem Pfad oder den Pfaden, die in dem zweiten Stapel gespeichert sind und den Wahrscheinlichkeiten.

12. Vorrichtung zur Dekodierung nach Anspruch 11, **dadurch gekennzeichnet, dass** sie unter Einsatz eines oder mehrerer integrierter Schaltungen des Typs Field Programmable Gate Array, anwendungsspezifische integrierte Schaltungen, Integration mit höchster Stufe verwendbar ist.

1

11

10

12

**Fig 1**

2

29

21

23

25

$26_1$

$27_1$

20

22

24

$28_1$

$27_{Ntx}$

$26_{Ntx}$

$28_{Ntx}$

**Fig 2**

Fig 3

**Fig 4**

EP 2 274 852 B1

**Fig 5**

27

**Fig 6**

**Fig 7**

| |
|---|
| [10], C21 |
| [11], C22 |
| [0], C1 |
| |

**Fig 8A**

| |
|---|
| [100], C211 |
| [101], C212 |
| [11], C22 |
| [0], C1 |
| |

**Fig 8B**

| |
|---|
| [101], C212 |
| [11], C22 |
| [1001], C2112 |
| [1000], C2111 |
| [0], C1 |
| |

**Fig 8C**

a1
| |
|---|
| [1010], C2121 |
| [11], C22 |
| [1011], C2122 |
| [1001], C2112 |
| [1000], C2111 |
| [0], C1 |
| |

**Fig 8D**

| |
|---|
| [111], C222 |
| [1011], C2122 |
| [1001], C2112 |
| [1000], C2111 |
| [110], C221 |
| [0], C1 |
| |

**Fig 8E**

| | a2 |
|---|---|
| [1110], C2221 | |
| [1111], C2222 | |
| [1011], C2122 | |
| [1001], C2112 | |
| [1000], C2111 | |
| [110], C221 | |
| [0], C1 | |
| | |

**Fig 8F**

90

Init

91    Signal RX

92

93

94

**Fig 9**

**Fig 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **F. JELINEK.** A fast sequential decoding algorithm using a stack. *IBM Journal Research Development,* Novembre 1969, vol. 13, 675-685
- **ARUL MURUGAN et al.** A unified framework for tree search decoding : rediscovering the sequential decoder. *IEEE transaction on information theory,* Mars 2006, vol. 52, 933-953
- **J. BOUTROS et al.** Soft-Input soft-output lattice sphere decoder for linear channels. *IEEE Global Télécommunications Conference,* 2003
- **J. BOUTROS ; E.VITERBO.** A Universal Lattice Code Decoder for Fading and Channels. *IEEE Transactions on Information Theory,* Juillet 1999
- **J.-C. BELFIORE ; G. REKAYA ; E. VITERBO.** The Golden Code : A 2 x 2 Full-Rate Space-Time Code with Non-Vanishing Determinants. *IEEE Transactions on Information Theory,* Avril 2005, vol. 51 (4), 1432-1436
- **V.TAROKH ; H. JAFARKHANI ; R. A. CALDER-BANK.** Space-Time block codes from orthogonal designs. *IEEE Transactions on Information Theory,* Juillet 1999, vol. 45, 1456-1467
- **H. BÖLCSKEI ; A. J. PAULRAJ.** Space-frequency coded broadband OFDM systems. *Proceedings on Wireless Commun. Networking Conf., Chicago,* 23 Septembre 2000, 1-6
- **S. ALAMOUTI.** Space-Time block coding : A simple transmitter diversity technique for wireless communications. *IEEE Journal On Select Areas In Communications,* Octobre 1998, vol. 16, 1451-1458
- **J. BOUTROS et al.** Soft-Input soft-output lattice sphere decoder for linear channels. *IEEE Global Telecommunications Conference,* 2003
- **B. HOCHWALD et al.** Achieving near-capacity on a multiple-antenna channel. *IEEE Transactions on communication,* Mars 2003